# EUROPEAN PATENT APPLICATION

(11) **EP 2 151 602 A1**
(43) Date of publication of application: **10.02.2010**
(21) Application number: 08827669.6
(22) Date of filing: 13.08.2008
(51) Int. Cl.: F16H 3/093, B62M 11/06, F16H 3/083, F16H 61/04, F16H 59/24, F16H 59/44, F16H 61/682

(54) **STEPPED AUTOMATIC TRANSMISSION AND VEHICLE WITH THE SAME**

(30) Priority: 21.08.2007 JP 2007214313; 08.08.2008 JP 2008204923
(71) Applicant: Yamaha Hatsudoki Kabushiki Kaisha, Iwata-shi, Shizuoka 438-8501 (JP)
(72) Inventor: OISHI, Akifumi, Iwata-shi Shizuoka 438-8501 (JP); MURAYAMA, Takuji, Iwata-shi Shizuoka 438-8501 (JP); HATA, Shinichiro, Iwata-shi Shizuoka 438-8501 (JP)
(74) Representative: Zimmermann, Tankred Klaus
(86) International application number: PCT/JP2008/064510
(87) International publication number: WO 2009/025214

(57) **Abstract**

[Problem] To provide a stepped automatic transmission that allows smooth shift change and has a simple structure.

[Means for Resolution] A first hydraulic clutch 70 becomes in an engaged state at a first shift and a disengaged state at a second shift. A second hydraulic clutch 66 becomes in an engaged state at the second shift and a disengaged state at the first shift. The first hydraulic clutch 70 includes a first working chamber 137. The second hydraulic clutch 66 includes a second working chamber 133. In the first working chamber 137 and the second working chamber 133, hydraulic release paths 70a and 66a having no valves are provided, respectively.

## Description

### [Technical Field]

The present invention relates to a stepped automatic transmission and a vehicle including the same.

### [Background Art]

Recently, for example, a stepped automatic transmission using a plurality of hydraulic clutch serving as a clutch for shifting is disclosed in Patent Document 1. FIG 33 is a cross sectional view showing a part of a stepped automatic transmission 500 disclosed in Patent Document 1. As shown in FIG 33, a stepped automatic transmission 500 includes a main shaft 501 and a counter shaft 502. The main shaft 501 includes a first speed driving gear 503, a second speed driving gear 504, and a third speed driving gear 505 having the number of teeth different according to a transmission gear ratio. On the other hand, the counter shaft 502 includes a first speed driven gear 506, a second speed driven gear 507, and a third speed driven gear 508. The first speed driven gear 506 meshes with the first speed driving gear 503. The second speed driven gear 507 meshes with the second speed driving gear 504. The third speed driven gear 508 meshes with the third speed driving gear 505.

The first speed driving gear 503 can rotate with respect to the main shaft 501. A first speed hydraulic multiple disk clutch 510 is provided between the main shaft 501 and the first speed driving gear 503. When the first speed is selected, the first speed hydraulic multiple disk clutch 510 is connected. By this, the main shaft 501 and the first speed driving gear 503 are connected to each other. As a result, power is transmitted from the main shaft 501 to the counter shaft 502 via the first speed driving gear 503 and the first speed driven gear 506.

The second speed driven gear 507 can rotate with respect to the counter shaft 502. A second speed hydraulic multiple disk clutch 511 is provided between the second speed driven gear 507 and the counter shaft 502. When shift is changed from the first speed to the second speed, the first speed hydraulic multiple disk clutch 510 is disengaged, and the second speed hydraulic multiple disk clutch 511 is connected. By this, the first speed driving gear 503 can rotate with respect to the main shaft 501. Further, the second speed driven gear 507 is connected to the counter shaft 502. As a result, power from the main shaft 501 to the counter shaft 502 is transmitted via the second speed driving gear 504 and the second speed driven gear 507.

The third speed driven gear 508, like the second speed driven gear 507, also can rotate with respect to the counter shaft 502. A third speed hydraulic multiple disk clutch 512 is provided between the third speed driven gear 508 and the counter shaft 502. When shift is changed from the second speed to the third speed, the second speed hydraulic multiple disk clutch 511 is disengaged, and the third speed hydraulic multiple disk clutch 512 is connected. By this, the second speed driven gear 507 can rotate with respect to the main shaft 501. Further, the third speed driven gear 508 is connected to the counter shaft 502. As a result, power from the main shaft 501 to the counter shaft 502 is transmitted via the third speed driving gear 505 and the third speed driven gear 508.
[Patent Document 1] JP-A-2003-90260

### [Disclosure of the Invention]

### [Problems that the Invention is to Solve]

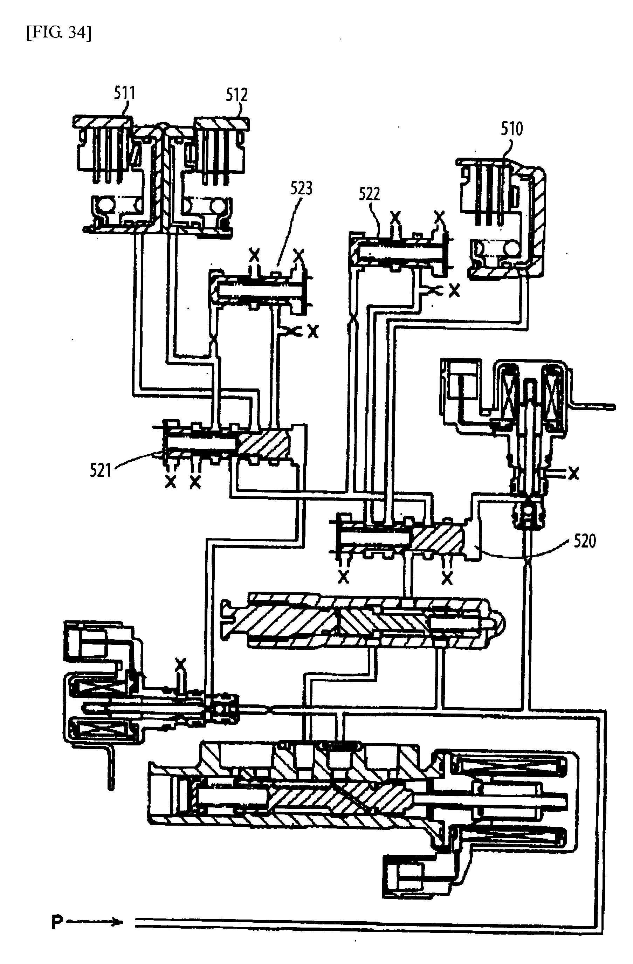

As described above, in the stepped automatic transmission 500, shift change is performed by intermittence of the hydraulic multiple disk clutches 510 to 512. Thus, when shift is changed, it is necessary that remaining pressure on a disengaged hydraulic multiple disk clutch is rapidly decreased. For this reason, spool valves 520 and 521 which control working oil to be supplied to the hydraulic multiple disk clutches 510 to 512, and control valve 522 and 523 which control working oil to be discharged from the hydraulic multiple disk clutches 510 to 512 as shown in FIG. 34. The control valves 522 and 523 are driven according to the disengaged hydraulic multiple disk clutch, so that remaining pressure on the disengaged hydraulic multiple disk clutch can be rapidly decreased. Thus, shift can be smoothly changed.

However, in the stepped automatic transmission 500, it is necessary to provide the spool valves 520 and 521 as well as the control valves 522 and 523. Therefore, the number of required valves is increased, so that the structure becomes complicated.

The present invention has been made in consideration of the above problems, and an object of the present invention is to provide a stepped automatic transmission in which shift can be smoothly changed and has a simple structure.

### [Means for Solving the Problems]

The stepped automatic transmission according to the invention steppedly switches a plurality of shifts including at least a first shift and a second shift. The stepped automatic transmission according to the invention is provided with an oil pump, a first hydraulic clutch, a second hydraulic clutch, a valve, a first hydraulic pressure release path, and a second hydraulic pressure release path. The oil pump supplies oil. The first hydraulic clutch has a first working chamber. The first working chamber is supplied with oil from the oil pump. The first hydraulic clutch becomes in an engaged state at the first shift. The first hydraulic clutch becomes in a disengaged state at the second shift. The second hydraulic clutch has a second working chamber. The second working chamber is supplied with oil from the oil pump. The second hydraulic clutch becomes in the engaged state at the second shift. The second hydraulic clutch becomes in the disengaged state at the first shift. The valve changes the engaged states between the oil pump and each of the first and second working chambers. The first hydraulic pressure release path is connected to the first working chamber. The first hydraulic pressure release path discharges oil in the first working chamber. The second hydraulic pressure release path is connected to the second working chamber. The second hydraulic pressure release path discharges oil in the second working chamber. The first and second hydraulic pressure release paths have no valves.

The vehicle according to the invention is provided with the stepped automatic transmission according to the invention.

### [Advantage of the Invention]

According to the invention, it is possible to provide a stepped automatic transmission, in which shift can be smoothly changed and the structure is simple.

### [Brief Description of the Drawings]

[FIG. 1] FIG. 1 is a left side view of a scooter type vehicle according to a first embodiment.
[FIG. 2] FIG. 2 is a cross sectional view of an engine unit according to the first embodiment.
[FIG. 3] FIG. 3 is a partial cross sectional view of the engine unit according to the first embodiment.
[FIG. 4] FIG. 4 is a schematic diagram showing the structure of the engine unit according to the first embodiment.
[FIG. 5] FIG. 5 is a schematic partial cross sectional view illustrating the arrangement of rotation shafts of the engine unit according to the first embodiment.
[FIG. 6] FIG. 6 is a partial cross sectional view of the engine unit showing the structure of a group of clutches on the downstream side according to the first embodiment.
[FIG. 7] FIG. 7 is a conceptual diagram showing an oil circuit.
[FIG. 8] FIG. 8 is a partial cross sectional view of the engine unit illustrating an oil filter etc.
[FIG. 9] FIG. 9 is a schematic diagram illustrating a power transmission path in the first speed in a transmission.
[FIG. 10] FIG. 10 is a schematic diagram illustrating a power transmission path in the second speed in the transmission.
[FIG. 11] FIG 11 is a schematic diagram illustrating a power transmission path in the third speed in the transmission.
[FIG. 12] FIG 12 is a schematic diagram illustrating a power transmission path in the fourth speed in the transmission.
[FIG. 13] FIG. 13 is a left side view of a moped according to a second embodiment.
[FIG. 14] FIG. 14 is a right side view of the moped according to the second embodiment.
[FIG. 15] FIG. 15 is a right side view of an engine unit according to the second embodiment.
[FIG. 16] FIG. 16 is a cross sectional view of the engine unit according to the second embodiment.
[FIG. 17] FIG. 17 is a partial cross sectional view of the engine unit according to the second embodiment.
[FIG 18] FIG 18 is a partial cross sectional view of the engine unit showing the structure of a group of clutches on the downstream side according to the second embodiment.
[FIG. 19] FIG 19 is a partial cross sectional view of the engine unit showing the structure of the group of clutches on the downstream side according to the first embodiment.
[FIG. 20] FIG. 20 is a partial cross sectional view of the engine unit showing the structure of the group of clutches on the downstream side according to the second embodiment.
[FIG. 21] FIG. 21 is a schematic diagram showing the structure of an engine unit according to a first modified example.
[FIG. 22] FIG. 22 is a schematic diagram showing the structure of an engine unit according to a second modified example.
[FIG. 23] FIG. 23 is a schematic diagram showing the structure of an engine unit according to a third modified example.
[FIG. 24] FIG. 24 is a schematic diagram showing the structure of an engine unit according to a fourth modified example.
[FIG. 25] FIG. 25 is a schematic diagram showing the structure of an engine unit according to a fifth modified example.
[FIG. 26] FIG. 26 is a schematic diagram showing the structure of an engine unit according to a sixth modified example.
[FIG. 27] FIG. 27 is a left side view of a motorcycle according to a third embodiment.
[FIG. 28] FIG. 28 is a cross sectional view of an engine unit according to the third embodiment.
[FIG. 29] FIG. 29 is a schematic side view of the engine unit according to the third embodiment.
[FIG. 30] FIG. 30 is a schematic diagram showing the structure of the engine according to the third embodiment.
[FIG. 31] FIG. 31 is a partial cross sectional view of the engine unit showing the structure of a group of clutches on the downstream side according to the third embodiment.
[FIG. 32] FIG. 32 is a hydraulic circuit diagram schematically showing an engine according to an eighth modified example.

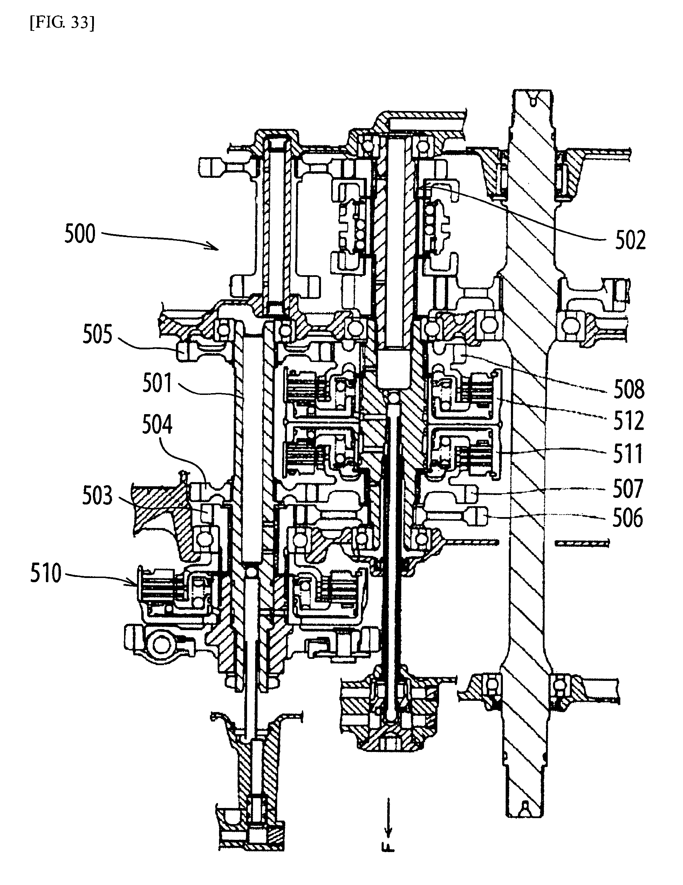

[FIG. 33] FIG. 33 is a cross sectional view showing a part of a stepped automatic transmission disclosed in Patent Document 1.
[FIG. 34] FIG. 34 is an oil circuit diagram of the stepped automatic transmission disclosed in Patent Document 1.

### [Description of the Reference Numerals and Signs]

- 1: Scooter type vehicle (vehicle)
- 2: Moped (vehicle)
- 3: Motorcycle (vehicle)
- 31: Transmission (stepped automatic transmission)
- 59: Second clutch (third hydraulic clutch)
- 59a: Working chamber (third working chamber)
- 59b: Leak hole (third hydraulic pressure release path)
- 66: Fourth clutch (second hydraulic clutch)
- 70: Third clutch (first hydraulic clutch)
- 66a: Leak hole (first hydraulic pressure release path)
- 70a: Leak hole (second hydraulic pressure release path)
- 133: Working chamber (second working chamber)
- 137: Working chamber (first working chamber)
- 140: Oil pump
- 143: Valve
- 144: First oil path
- 145: Second oil path
- 146: Third oil path (144+145+146: hydraulic pressure supplying path)
- 148: Internal path (first connection path)
- 149: Internal path (second connection path)

### [Best Mode for Carrying Out the Invention]

### «First Embodiment»

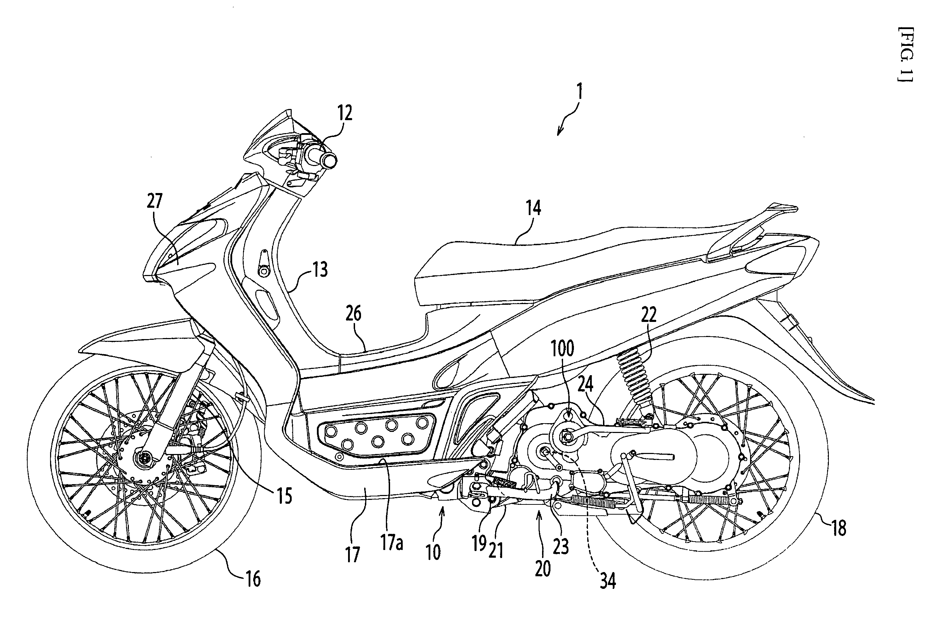

In a first embodiment, as an example of a motorcycle to which the invention is applied, a scooter type vehicle 1 shown in FIG. 1 is used to explain a preferred embodiment of the invention. Note that, in the invention, the "motorcycle" is not limited to a scooter type vehicle. The term "motorcycle" indicates a motorcycle defined in a broad sense. More specifically, in the specification, the term "motorcycle" indicates any vehicle that changes direction by banking the vehicle. At least one of the front wheel and the rear wheel may include a plurality of wheels. More specifically, the "motorcycle" may be a vehicle in which at least one of the front wheel and the rear wheel includes two wheels that are arranged adjacent to each other. Examples of the "motorcycle" include, at least, a motorcycle defined in a narrow sense, a scooter type vehicle, a moped type vehicle, and an off-road vehicle.

### (Schematic structure of the scooter type vehicle 1)

First, the schematic structure of the scooter type vehicle 1 will be explained with reference to FIG. 1. Note that the terms front and rear, and left and right as used in the following description indicate the front and rear and the left and right as viewed by a rider seated on a seat 14 of the scooter type vehicle 1.

The scooter type vehicle 1 is provided with a body frame 10. The body frame 10 includes a head pipe (not shown in the figure). The head pipe extends downward in a front section of the vehicle such that it is slightly inclined to the front. A steering shaft (not shown in the figure) is rotatably inserted to the head pipe. A handle 12 is provided at the upper end of the steering shaft. On the other hand, a front fork 15 is connected to the lower end of the steering shaft. A front wheel 16 serving as a driven wheel is rotatably attached to the lower end of the front fork 15.

A body cover 13 is attached to the body frame 10. The body cover 13 covers a part of the body frame 10. The body cover 13 includes a leg shield 27. The leg shield 27 covers the front of the vehicle. Further, the body cover 13 is disposed to the rear of the leg shield 27, and includes foot rests 17 that are provided on the left and right sides of the vehicle. Foot rest surfaces 17a are formed on the foot rests 17. The rider's feet are placed on the foot rest surfaces 17a.

A center cover 26 that is a part of the body cover 13 is provided between the left and right foot rests 17. The center cover 26 protrudes upward from the foot rest surfaces 17a of the foot rests 17, and is formed in a tunnel shape extending in the front-rear direction. The seat 14 on which the rider sits is attached to a section of the body cover 13 located to the rear of the center cover 26. Further, a side stand 23 is attached to the body frame 10 substantially at the center of the vehicle.

An engine unit 20 is swingably suspended from the body frame 10. More specifically, the engine unit 20 is a swing unit type engine. An engine bracket 21 is integrally connected to the engine unit 20. The engine unit 20 is swingably attached to a pivot shaft 19 of the body frame 10 via the engine bracket 21. Further, one end of a cushion unit 22 is attached to the engine unit 20. The other end of the cushion unit 22 is attached to the rear of the body frame 10. The swinging movement of the engine unit 20 is suppressed by the cushion unit 22.

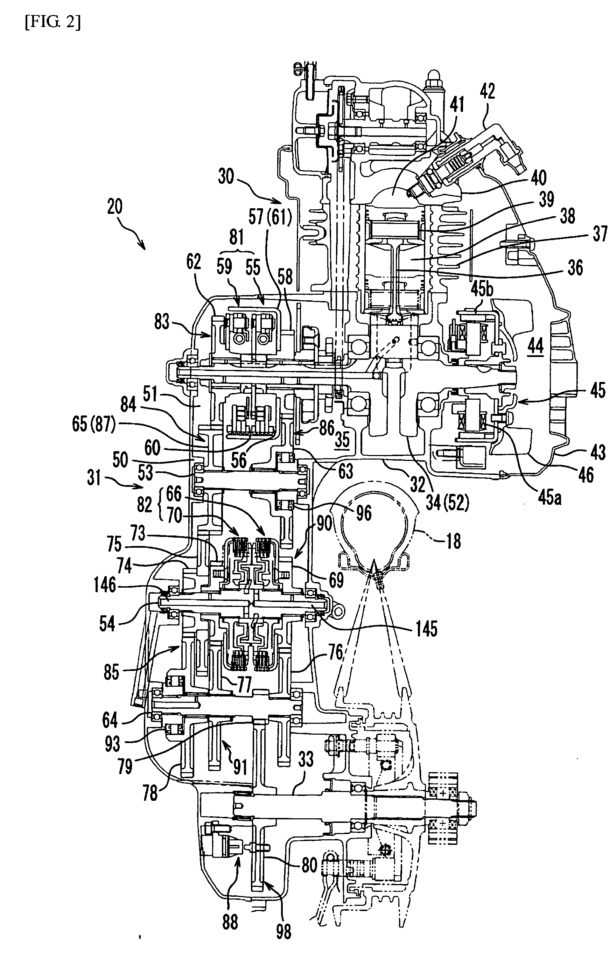

The engine unit 20 includes an output shaft 33 (refer to FIG. 2) that outputs power generated in the engine unit 20. A rear wheel 18 is attached to the output shaft 33. Accordingly, the rear wheel 18 is driven by the power generated in the engine unit 20. That is, the rear wheel 18 is a driving wheel in the first embodiment.

As shown in FIG. 2, in this embodiment, a vehicle speed sensor 88 is provided on the output shaft 33. More specifically, the vehicle speed sensor 88 is provided on a fourteenth gear 80 that rotates together with the output shaft 33. Note that the vehicle speed sensor 88 may be provided on a rotation shaft other than the output shaft 33, and may be provided on another member that rotates at a certain rotation speed ratio with respect to the output shaft 33.

### (Structure of the engine unit 20)

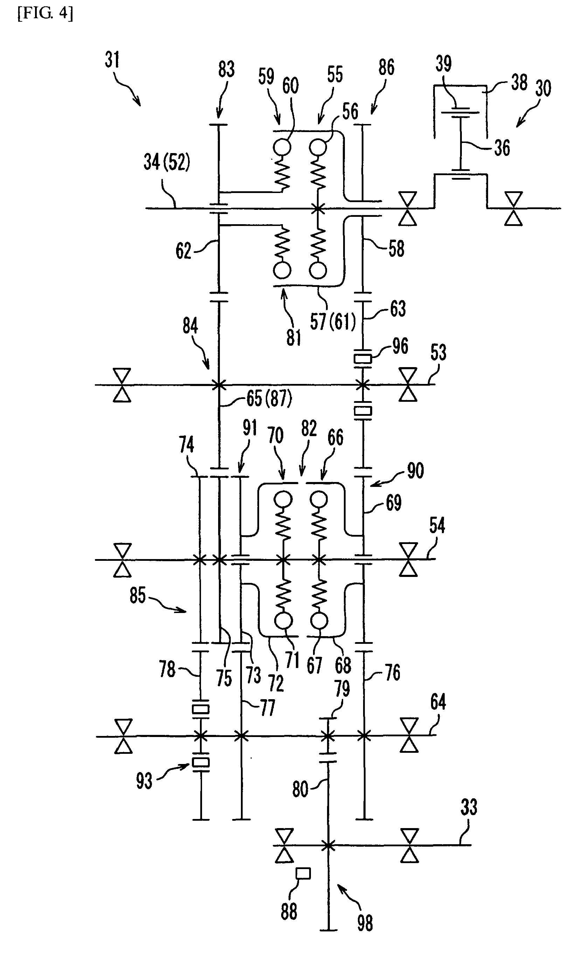

FIG. 2 is a cross sectional view of the engine unit 20. FIG. 4 is a schematic diagram showing the structure of the engine unit 20. As shown in FIG. 2, the engine unit 20 includes an engine 30 and a transmission 31. Note that, in the first embodiment, an example is described in which the engine 30 is a single cylinder engine. However, in the invention, the engine 30 is not limited to a single cylinder engine. The engine 30 may be a multi-cylinder engine, such as a two cylinder engine.

### - Engine 30 -

The engine 30 includes a crank case 32, a cylinder body 37, a cylinder head 40, and a crank shaft 34. A crank chamber 35 is formed within and defined by the crank case 32. A cylinder 38 that opens into the crank chamber 35 is formed within and defined by the cylinder body 37. The cylinder head 40 is attached to the upper end of the cylinder body 37. The crank shaft 34 that extends in the vehicle width direction is disposed in the crank chamber 35. A connecting rod 36 is attached to the crank shaft 34. A piston 39 disposed in the cylinder 38 is attached to the tip end of the connecting rod 36. A combustion chamber 41 is defined by the piston 39, the cylinder body 37, and the cylinder head 40. A spark plug 42 is attached to the cylinder head 40 such that an ignition section at the tip end of the spark plug 42 is located in the combustion chamber 41.

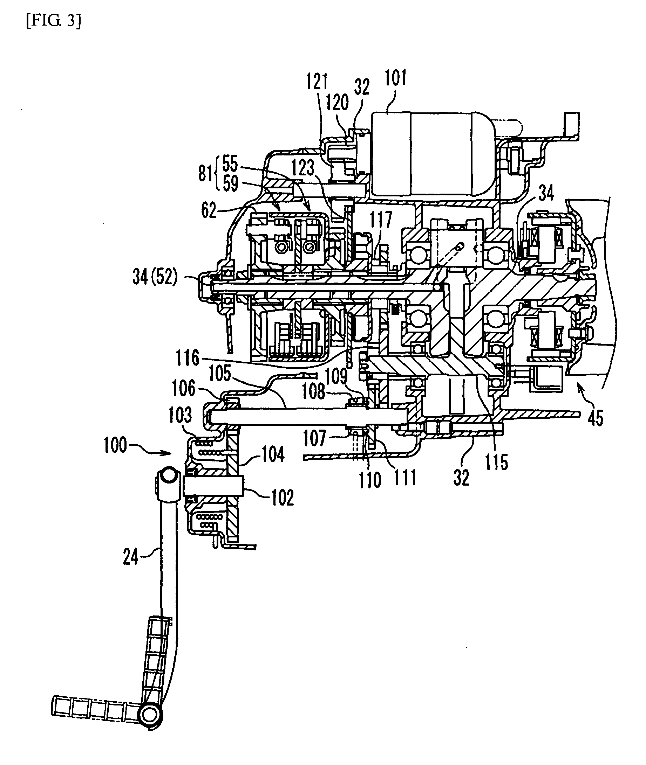

FIG. 3 is a partial cross sectional view of the engine unit 20, which shows a kick starter 100 and a starter 101. As shown in FIG. 1 and FIG. 3, the engine unit 20 is provided with the kick starter 100. The rider of the scooter type vehicle 1 operates the kick starter 100 to start the engine 30.

The kick starter 100 includes a kick pedal 24. As shown in FIG. 1, the kick pedal 24 is provided to the rear of and above the crank shaft 34, on the left side of the crank case 32. As shown in FIG. 3, the kick pedal 24 is attached to a kick shaft 102. A compression coil spring 103 is provided between the kick shaft 102 and the crank case 32. The compression coil spring 103 applies, to the kick shaft 102 rotated by the rider's operation, an urging force in a reverse rotating direction. Further, a gear 104 is provided on the kick shaft 102. Furthermore, a gear 106 is provided such that it cannot rotate with respect to a shaft 105. The gear 104 meshes with the gear 106. Rotation of the kick shaft 102 is transmitted to the crank shaft 34 by the gear 104 etc.

A ratchet 107 is formed on the shaft 105. A ratchet 108 is attached to a section of the shaft 105 where the ratchet 107 is formed. When the shaft 105 rotates, the ratchet 108 is guided by the ratchet 107, and moves to the right in the axial direction of the shaft 105. On the other hand, when the shaft 105 rotates in the reverse direction by the urging force of the compression coil spring 103, the ratchet 108 is guided by the ratchet 107, and moves to the left in the axial direction of the shaft 105.

An engagement section 109 is formed on the right end face of the ratchet 108. Moreover, an engagement section 110 is formed on the left end face of a gear 111 rotatably provided on the shaft 105. The engagement section 109 of the ratchet 108 engages with the engagement section 110 when the ratchet 108 moves to the right. Thus, when the ratchet 108 moves to the right, rotation of the shaft 105 is transmitted to the gear 111. The gear 111 meshes with a gear 116 formed on a balancer shaft 115. Further, the gear 116 meshes with a gear 117 formed on the crank shaft 34. Thus, rotation of the gear 111 is transmitted to the crank shaft 34 via the balancer shaft 115. Accordingly, when the kick pedal 24 is operated, the crank shaft 34 rotates and the engine 30 is started.

Note that, in a plan view, the kick shaft 102 extends toward the center of the vehicle such that it straddles the transmission 31. That is, as shown in FIG. 3, the kick shaft 102 extends from the left side in the vehicle width direction toward the center of the vehicle, and is disposed such that the kick shaft 102 is aligned with a section of the transmission 31 in the up-down direction.

In addition, the starter 101 is also provided in the engine 30. The starter 101 is attached to the crank case 32. The rotation of the starter 101 is transmitted to the crank shaft 34 via gears 120, 121, and 122. Thus, when the starter 101 is driven by the rider's operation, the engine 30 is started.

### - Generator 45 -

A generator cover 43 is attached to the right side of the crank case 32. A generator housing 44 is defined by the generator cover 43 and the crank case 32.

The right end of the crank shaft 34 protrudes from the crank chamber 35 and reaches the generator housing 44. In the generator housing 44, the generator 45 is attached to the right end of the crank shaft 34. The generator 45 includes an inner 45a and an outer 45b. The inner 45a is attached such that it cannot rotate with respect to the crank case 32. On the other hand, the outer 45b is attached to the right end of the crank shaft 34. The outer 45b rotates together with the crank shaft 34. Accordingly, when the crank shaft 34 rotates, the outer 45b rotates relatively to the inner 45a. Thus, power is generated. Note that a fan 46 is provided on the outer 45b. The fan 46 rotates together with the crank shaft 34, thereby cooling the engine 30.

A transmission cover 50 is attached to the left side of the crank case 32. The transmission cover 50 and the crank case 32 define a transmission housing 51 located on the left side of the crank case 32.

### - Structure of the transmission 31 -

Next, mainly referring to FIG. 4, the structure of the transmission 31 will be described in detail. The transmission 31 is a four-speed stepped automatic transmission that includes an input shaft 52 and the output shaft 33. The transmission 31 is a gear train stepped transmission in which power is transmitted from the input shaft 52 to the output shaft 33 via a plurality of pairs of shift gears.

As shown in FIG. 2, the left end of the crank shaft 34 protrudes from the crank chamber 35, and reaches the transmission housing 51. The crank shaft 34 also serves as the input shaft 52 of the transmission 31.

### - Structure of the rotation shafts -

The transmission 31 has a first rotation shaft 53, a second rotation shaft 54, a third rotation shaft 64, and the output shaft 33. The first rotation shaft 53, the second rotation shaft 54, the third rotation shaft 64, and the output shaft 33 are respectively provided in parallel with the input shaft 52.

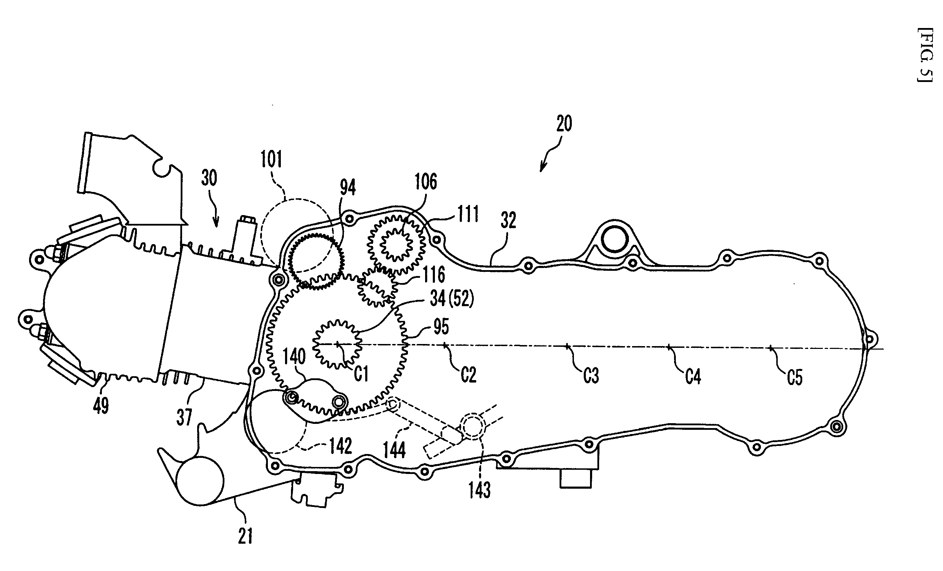

In FIG. 5, the reference numerals C1, C2, C3, C4, and C5 respectively represent the axis of the input shaft 52, the axis of the first rotation shaft 53, the axis of the second rotation shaft 54, the axis of the third rotation shaft 64, and the axis of the output shaft 33. As shown in FIG. 5, in a side view, the input shaft 52, the first rotation shaft 53, the second rotation shaft 54, the third rotation shaft 64, and the output shaft 33 are arranged in a generally horizontal direction orthogonal to the axial direction of the input shaft 52. More specifically, the axis C1 of the input shaft 52, the axis C2 of the first rotation shaft 53, the axis C3 of the second rotation shaft 54, the axis C4 of the third rotation shaft 64, and the axis C5 of the output shaft 33 are arranged in a generally horizontal line in a side view. By arranging the respective rotation shafts in this manner, the distance between the input shaft 52 and the output shaft 33 can be made relatively long. Note that, in FIG. 5, the reference numeral 94 denotes an idle gear. The reference numeral 95 denotes a one-way gear for the starter.

Note that, in the first embodiment, an example will be described in which the output shaft 33 and the third rotation shaft 64 are separately provided. However, the invention is not limited to this structure. The output shaft 33 and the third rotation shaft 64 may be the same shaft. In other words, the rear wheel 18 may be attached to the third rotation shaft 64.

### - A group of clutches 81 on the upstream side -

The input shaft 52 is provided with a group of clutches 81 on the upstream side. The group of clutches 81 on the upstream side includes a first clutch 55 and a second clutch 59. The first clutch 55 is disposed on the right side of the second clutch 59. The first clutch 55 and the second clutch 59 are centrifugal clutches. More specifically, in the first embodiment, the first clutch 55 and the second clutch 59 are drum type centrifugal clutches. However, the invention is not limited to this structure. The second clutch 59 may be a clutch other than a centrifugal clutch. For example, the second clutch 59 may be a hydraulic clutch.

The first clutch 55 includes an inner 56 as an input side clutch member, and an outer 57 as an output side clutch member. The inner 56 is provided such that it cannot rotate with respect to the input shaft 52. Accordingly, the inner 56 rotates together with the input shaft 52. On the other hand, the outer 57 can rotate with respect to the input shaft 52. When the rotation speed of the input shaft 52 becomes higher than a predetermined rotation speed, the inner 56 and the outer 57 come into contact due to centrifugal force acting on the inner 56. Thus, the first clutch 55 is engaged. Note that, when the inner 56 and the outer 57 are rotating in the engaged state, if the rotation speed thereof becomes lower than the predetermined rotation speed, the centrifugal force acting on the inner 56 is reduced. As a result, the inner 56 and the outer 57 separate. Thus, the first clutch 55 is disengaged.

The second clutch 59 includes an inner 60 as an output side clutch member, and an outer 61 as an input side clutch member. The inner 60 is provided such that it cannot rotate with respect to an eleventh gear 62 to be described later. When the input shaft 52 rotates, the rotation is transmitted to the inner 60 via a first pair of shift gears 86, the first rotation shaft 53, and a fourth pair of shift gears 83. Accordingly, the inner 60 rotates together with the rotation of the input shaft 52. The outer 61 can rotate with respect to the input shaft 52. When the rotation speed of the input shaft 52 becomes higher than a predetermined rotation speed, the inner 60 and the outer 61 come into contact due to centrifugal force acting on the inner 60. Thus, the second clutch 59 is engaged. Note that, when the inner 60 and the outer 61 are rotating in the engaged state, if the rotation speed thereof becomes lower than the predetermined rotation speed, the centrifugal force acting on the inner 60 is reduced. As a result, the inner 60 and the outer 61 separate. Thus, the second clutch 59 is disengaged.

Note that, in the first embodiment, the outer 57 and the outer 61 are formed by the same member. However, the invention is not limited to this structure. The outer 57 and the outer 61 may be formed by separate members.

The rotation speed of the input shaft 52 when the first clutch 55 is engaged, and the rotation speed of the input shaft 52 when the second clutch 59 is engaged are different from each other. In other words, the rotation speed of the inner 56 when the first clutch 55 is engaged, and the rotation speed of the inner 60 when the second clutch 59 is engaged are different from each other. More specifically, the rotation speed of the input shaft 52 when the first clutch 55 is engaged is lower than the rotation speed of the input shaft 52 when the second clutch 59 is engaged. To be even more specific, the first clutch 55 is engaged when the rotation speed of the input shaft 52 is equal to or higher than a first rotation speed. On the other hand, the first clutch 55 is disengaged when the rotation speed of the input shaft 52 is lower than the first rotation speed. The second clutch 59 is engaged when the rotation speed of the input shaft 52 is equal to or higher than a second rotation speed that is higher than the first rotation speed. On the other hand, the second clutch 59 is disengaged when the rotation speed of the input shaft 52 is lower than the second rotation speed.

A first gear 58 is provided on the outer 57 of the first clutch 55 such that it cannot rotate with respect to the outer 57. The first gear 58 rotates together with the outer 57 of the first clutch 55. On the other hand, a second gear 63 is provided on the first rotation shaft 53. The second gear 63 meshes with the first gear 58. The first gear 58 and the second gear 63 form the first pair of shift gears 86. In this embodiment, the first pair of shift gears 86 is a pair of first speed shift gears.

The second gear 63 is a one-way gear. More specifically, the second gear 63 transmits the rotation of the first gear 58 to the first rotation shaft 53. On the other hand, the second gear 63 does not transmit the rotation of the first rotation shaft 53 to the input shaft 52. That is, the second gear 63 also serves as a one-way rotation transmission mechanism 96.

The eleventh gear 62 is provided on the inner 60 that is an output side clutch member of the second clutch 59. The eleventh gear 62 rotates together with the inner 60. In addition, a twelfth gear 65 is provided on the first rotation shaft 53. The twelfth gear 65 meshes with the eleventh gear 62. The twelfth gear 65 and the eleventh gear 62 form the fourth pair of shift gears 83. The fourth pair of shift gears 83 has a gear ratio different from that of the first pair of shift gears 86. More specifically, the fourth pair of shift gears 83 has a gear ratio smaller than that of the first pair of shift gears 86. The fourth pair of shift gears 83 is a pair of second speed shift gears.

Between the first pair of shift gears 86 and the fourth pair of shift gears 83, the first clutch 55 and the second clutch 59 are located. In other words, the first clutch 55 and the second clutch 59 are disposed between the first pair of shift gears 86 and the fourth pair of shift gears 83.

In this embodiment, the twelfth gear 65 also functions as a ninth gear 87. In other words, the twelfth gear 65 and the ninth gear 87 are common. A tenth gear 75 is provided on the second rotation shaft 54 such that the tenth gear 75 cannot rotate with respect to the second rotation shaft 54. The tenth gear 75 rotates together with the second rotation shaft 54. The ninth gear 87 that also functions as the twelfth gear 65 meshes with the tenth gear 75. The ninth gear 87 that also functions as the twelfth gear 65 and the tenth gear 75 form a first pair of transmission gears 84.

A seventh gear 74 is provided on the second rotation shaft 54 such that it cannot rotate with respect to the second rotation shaft 54. The seventh gear 74 rotates together with the second rotation shaft 54. In addition, an eighth gear 78 is provided on the third rotation shaft 64 such that it cannot rotate with respect to the third rotation shaft 64. The third rotation shaft 64 rotates together with the eighth gear 78. The seventh gear 74 and the eighth gear 78 mesh with each other. The seventh gear 74 and the eighth gear 78 form a second pair of transmission gears 85.

The eighth gear 78 is a one-way gear. More specifically, the eighth gear 78 transmits the rotation of the second rotation shaft 54 to the third rotation shaft 64. On the other hand, the eighth gear 78 does not transmit the rotation of the third rotation shaft 64 to the second rotation shaft 54. That is, the eighth gear 78 also serves as a one-way rotation transmission mechanism 93.

Note that it is not essential in the invention for the eighth gear 78 to be a one-way gear. For example, a structure may be adopted in which the eighth gear 78 is a normal gear, and the seventh gear 74 is a one-way gear. In other words, the seventh gear 74 may also serve as a one-way rotation transmission mechanism. More specifically, a structure may be adopted in which the seventh gear 74 transmits the rotation of the second rotation shaft 54 to the eighth gear 78, but it does not transmit the rotation of the eighth gear 78 to the second rotation shaft 54.

### - A group of clutches 82 on the downstream side -

The second rotation shaft 54 is provided with a group of clutches 82 on the downstream side. The group of clutches 82 on the downstream side is located to the rear of the group of clutches 81 on the upstream side. As shown in FIG. 2, the group of clutches 82 on the downstream side and the group of clutches 81 on the upstream side are disposed at locations where they at least partially overlap in the axial direction of the input shaft 52. In other words, the group of clutches 82 on the downstream side and the group of clutches 81 on the upstream side are disposed at locations where they at least partially overlap in the vehicle width direction. In more detail, the group of clutches 82 on the downstream side and the group of clutches 81 on the upstream side are disposed at locations where they substantially overlap in the vehicle width direction.

The group of clutches 82 on the downstream side includes a third clutch 70 and a fourth clutch 66. The fourth clutch 66 is disposed on the right side of the third clutch 70. Therefore, the direction in which the first clutch 55 is located with respect to the second clutch 59 is the same as the direction in which the fourth clutch 66 is located with respect to the third clutch 70. As shown in FIG. 2, the first clutch 55 and the fourth clutch 66 are disposed so that they at least partially overlap in the vehicle width direction. In other words, the first clutch 55 and the fourth clutch 66 are disposed so that they at least partially overlap in the axial direction of the input shaft 52. Also, the second clutch 59 and the third clutch 70 are disposed so that they at least partially overlap in the vehicle width direction. In other words, the second clutch 59 and the third clutch 70 are disposed so that they at least partially overlap in the axial direction of the input shaft 52. Specifically, the first clutch 55 and the fourth clutch 66 are disposed so that they substantially overlap in the vehicle width direction. Also, the second clutch 59 and the third clutch 70 are disposed so that they substantially overlap in the vehicle width direction.

In this embodiment, the third clutch 70 and the fourth clutch 66 are hydraulic clutches. More specifically, in the first embodiment, the third clutch 70 and the fourth clutch 66 are disc type hydraulic clutches. However, the invention is not limited to this structure. The fourth clutch 66 and the third clutch 70 may be clutches other than hydraulic clutches. For example, the fourth clutch 66 and the third clutch 70 may be centrifugal clutches. However, it is preferable that the fourth clutch 66 and the third clutch 70 are hydraulic clutches.

As described above, in the invention, the first clutch 55 is a centrifugal clutch, and at least one of the second clutch 59, the third clutch 70 and the fourth clutch 66 may be a hydraulic clutch. As long as this condition is met, the second clutch 59, the third clutch 70 and the fourth clutch 66 may be drum type or disc type centrifugal clutches, or may be drum type or disc type hydraulic clutches. However, it is desirable for two or more of the second clutch 59, the third clutch 70 and the fourth clutch 66 to be hydraulic clutches. In particular, it is desirable for the second clutch 59 to be a centrifugal clutch and for the third clutch 70 and the fourth clutch 66 to be hydraulic clutches. Then, it is desirable for the third clutch 70 and the fourth clutch 66 that are hydraulic clutches to be disposed on the same rotation shaft and for the first clutch 55 and the second clutch 59 that are centrifugal clutches to be disposed on a separate rotation shaft.

In the invention, the term "centrifugal clutch" refers to a clutch that has an input side clutch member and an output side clutch member, where, when the rotation speed of the input side clutch member is equal to or higher than a predetermined rotation speed, the input side clutch member and the output side clutch member are engaged and joined, and when the rotation speed of the input side clutch member is lower than the predetermined rotation speed, the input side clutch member and the output side clutch member separate and are disengaged.

The rotation speed of the second rotation shaft 54 when the third clutch 70 is engaged, and the rotation speed of the second rotation shaft 54 when the fourth clutch 66 is engaged are different from each other. In other words, the rotation speed of the inner 71 when the third clutch 70 is engaged, and the rotation speed of the inner 67 when the fourth clutch 66 is engaged are different from each other. More specifically, the rotation speed of the second rotation shaft 54 when the third clutch 70 is engaged is lower than the rotation speed of the second rotation shaft 54 when the fourth clutch 66 is engaged.

The third clutch 70 is provided with the inner 71 as an input side clutch member, and an outer 72 as an output side clutch member. The inner 71 is provided such that it cannot rotate with respect to the second rotation shaft 54. Accordingly, the inner 71 rotates together with the rotation of the second rotation shaft 54. On the other hand, the outer 72 can rotate with respect to the second rotation shaft 54. In a state where the third clutch 70 is disengaged, when the second rotation shaft 54 rotates, the inner 71 rotates together with the second rotation shaft 54, but the outer 72 does not rotate together with the second rotation shaft 54. In a state where the third clutch 70 is engaged, both the inner 71 and the outer 72 rotate together with the second rotation shaft 54.

A fifth gear 73 is attached to the outer 72 that is an output side clutch member of the third clutch 70. The fifth gear 73 rotates together with the outer 72. In addition, a sixth gear 77 is provided on the third rotation shaft 64 such that it cannot rotate with respect to the third rotation shaft 64. The sixth gear 77 rotates together with the third rotation shaft 64. The fifth gear 73 and the sixth gear 77 mesh with each other. Therefore, the rotation of the outer 72 is transmitted to the third rotation shaft 64 via the fifth gear 73 and the sixth gear 77.

The fifth gear 73 and the sixth gear 77 form a third pair of shift gears 91. The third pair of shift gears 91 has a gear ratio that is different from the ratios of the first pair of shift gears 86, the fourth pair of shift gears 83, and a second pair of shift gears 90.

The third pair of shift gears 91 is located with respect to the third clutch 70 on the same side on which the fourth pair of shift gears 83 is located with respect to the second clutch 59. More specifically, the third pair of shift gears 91 is located on the left side of the third clutch 70. In a similar manner, the fourth pair of shift gears 83 is located on the left side of the second clutch 59.

Further, the third pair of shift gears 91 and the fourth pair of shift gears 83 are disposed so that they at least partially overlap with each other in the vehicle width direction. In other words, the third pair of shift gears 91 and the fourth pair of shift gears 83 are disposed so that they at least partially overlap with each other in the axial direction of the input shaft 52. More specifically, the third pair of shift gears 91 and the fourth pair of shift gears 83 are disposed so that they substantially overlap in the vehicle width direction.

The fourth clutch 66 is provided with the inner 67 as an input side clutch member and an outer 68 as an output side clutch member. The inner 67 is provided such that it cannot rotate with respect to the second rotation shaft 54. Accordingly, the inner 67 rotates together with the rotation of the second rotation shaft 54. On the other hand, the outer 68 can rotate with respect to the second rotation shaft 54. In a state where the fourth clutch 66 is disengaged, when the second rotation shaft 54 rotates, the inner 67 rotates together with the second rotation shaft 54, but the outer 68 does not rotate together with the second rotation shaft 54. In a state where the fourth clutch 66 is engaged, both the inner 67 and the outer 68 rotate together with the second rotation shaft 54.

A third gear 69 is attached to the outer 68 that is an output side clutch member of the fourth clutch 66. The third gear 69 rotates together with the outer 68. In addition, a fourth gear 76 is provided on the third rotation shaft 64 such that it cannot rotate with respect to the third rotation shaft 64. The fourth gear 76 rotates together with the third rotation shaft 64. The third gear 69 and the fourth gear 76 mesh with each other. Therefore, the rotation of the outer 68 is transmitted to the third rotation shaft 64 via the third gear 69 and the fourth gear 76.

The fourth gear 76 and the third gear 69 form the second pair of shift gears 90. The second pair of shift gears 90 has a gear ratio that is different from the ratios of the first pair of shift gears 86 and the fourth pair of shift gears 83.

Between the third pair of shift gears 91 and the second pair of shift gears 90, the third clutch 70 and the fourth clutch 66 are located. In other words, the third clutch 70 and the fourth clutch 66 are disposed between the third pair of shift gears 91 and the second pair of shift gears 90.

The second pair of shift gears 90 is located with respect to the fourth clutch 66 on the same side on which the first pair of shift gears 86 is located with respect to the first clutch 55. More specifically, the second pair of shift gears 90 is located on the right side of the fourth clutch 66. In a similar manner, the first pair of shift gears 86 is located on the right side of the first clutch 55.

Further, the second pair of shift gears 90 and the first pair of shift gears 86 are disposed so that they at least partially overlap with each other in the vehicle width direction. In other words, the second pair of shift gears 90 and the first pair of shift gears 86 are disposed so that they at least partially overlap with each other in the axial direction of the input shaft 52. More specifically, the second pair of shift gears 90 and the first pair of shift gears 86 are disposed so that they substantially overlap in the vehicle width direction.

A thirteenth gear 79 is provided on the third rotation shaft 64 such that it cannot rotate with respect to the third rotation shaft 64. The thirteenth gear 79 is disposed on the left side of the fourth gear 76 and the sixth gear 77, in the vehicle width direction. The thirteenth gear 79 rotates together with the third rotation shaft 64. Furthermore, the fourteenth gear 80 is provided on the output shaft 33 such that it cannot rotate with respect to the output shaft 33. In other words, the fourteenth gear 80 rotates together with the output shaft 33. The fourteenth gear 80 and the thirteenth gear 79 form a third pair of transmission gears 98. The third pair of transmission gears 98 transmits the rotation of the third rotation shaft 64 to the output shaft 33.

### - Detailed structure of the group of clutches 82 on the downstream side -

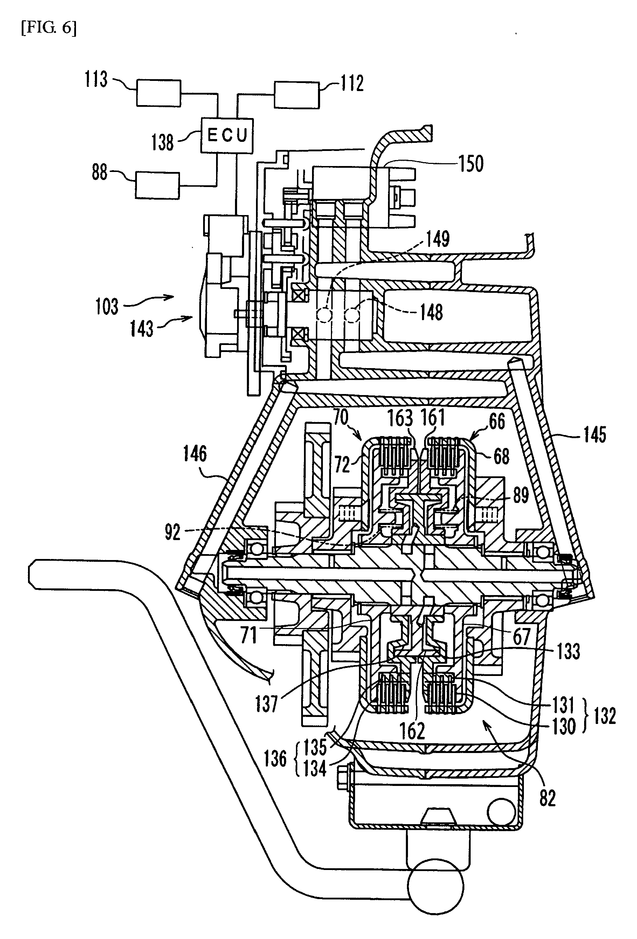

Next, with reference to FIG. 6 to FIG. 8, the group of clutches 82 on the downstream side will be described in further detail.

The third clutch 70 is provided with a group of plates 136. The group of plates 136 includes a plurality of friction plates 134 and a plurality of clutch plates 135. The plurality of friction plates 134 and the plurality of clutch plates 135 are alternately laminated in the vehicle width direction. The friction plates 134 cannot rotate with respect to the outer 72. On the other hand, the clutch plates 135 cannot rotate with respect to the inner 71.

The inner 71 can rotate with respect to the outer 72. A pressure plate 163 is formed opposite to the outer 72 of the inner 71 in the vehicle width direction. The pressure plate 163 is urged to the right of the vehicle width direction by a compression coil spring 92. That is, the pressure plate 163 is urged to a boss 162 by the compression coil spring 92.

A working chamber 137 is formed between the boss 162 and the pressure plate 163. The working chamber 137 is filled with oil. As the oil pressure in the working chamber 137 is increased, the pressure plate 163 is displaced in a direction to be separate from the boss 162. By this, the distance between the pressure plate 163 and the inner 71 is short. Thus, the group of plates 136 is brought into a pressure contact state. As a result, the inner 71 and the outer 72 rotate together, and the third clutch 70 is engaged.

On the other hand, as the pressure in the working chamber 137 is decreased, the pressure plate 163 is displaced to the boss 162 by the compression coil spring 92. By this, the pressure contact state of the group of plates 136 is released. As a result, the inner 71 and the outer 72 can relatively rotate together and the third clutch 70 is disengaged.

Although not shown in the figures, a tiny leak hole that communicates with the working chamber 137 is formed in the third clutch 70. Further, a gap between the inner 71 and the outer 72 is not sealed. Thus, the oil in the working chamber 137 can be rapidly discharged when the clutch 70 is disengaged. Therefore, according to the embodiment, the response of the clutch 70 can be improved. In addition, according to the embodiment, the oil scattering from the leak hole or the gap between the inner 71 and the outer 72 can be used to lubricate other sliding sections effectively.

The fourth clutch 66 is provided with a group of plates 132. The group of plates 132 includes a plurality of friction plates 130 and a plurality of pressure plates 131. The plurality of friction plates 130 and the plurality of pressure plates 131 are alternately laminated in the vehicle width direction. The friction plates 130 cannot rotate with respect to the outer 68. On the other hand, the clutch plates 131 cannot rotate with respect to the inner 67.

The inner 67 can rotate with respect to the outer 68 and be displaced in the vehicle width direction. A pressure plate 161 is formed opposite to the outer 68 of the inner 67 in the vehicle width direction. The pressure plate 161 is urged to the left of the vehicle width direction by a compression coil spring 89. That is, the pressure plate 161 is urged to the boss 162 by the compression coil spring 89.

A working chamber 133 is formed between the boss 162 and the pressure plate 161. The working chamber 133 is filled with oil. As the oil pressure in the working chamber 133 is increased, the pressure plate 161 is displaced in a direction to be separate from the boss 162. By this, the distance between the pressure plate 161 and the inner 67 is short. Thus, the group of plates 132 is brought into a pressure contact state. As a result, the inner 67 and the outer 68 rotate together and the fourth clutch 66 is engaged.

On the other hand, as the pressure in the working chamber 133 is decreased, the pressure plate 161 is displaced to the boss 162 by the compression coil spring 89. By this, the pressure contact state of the group of plates 132 is released. As a result, the inner 67 and the outer 68 can relatively rotate together and the fourth clutch 66 is disengaged.

Although not shown in the figures, a tiny leak hole that communicates with the working chamber 133 is formed in the fourth clutch 66. Further, a gap between the inner 67 and the outer 68 is not sealed. Thus, the oil in the working chamber 133 can be rapidly discharged when the clutch 66 is disengaged. Therefore, according to the embodiment, the response of the clutch 66 can be improved. In addition, according to the embodiment, the oil scattering from the leak hole or the gap between the inner 67 and the outer 68 can be used to lubricate other sliding sections effectively.

### - Oil path 139 -

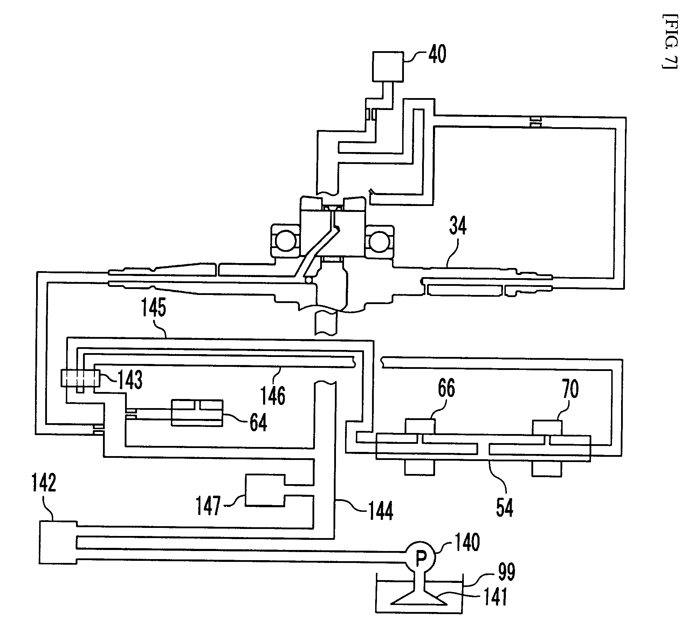

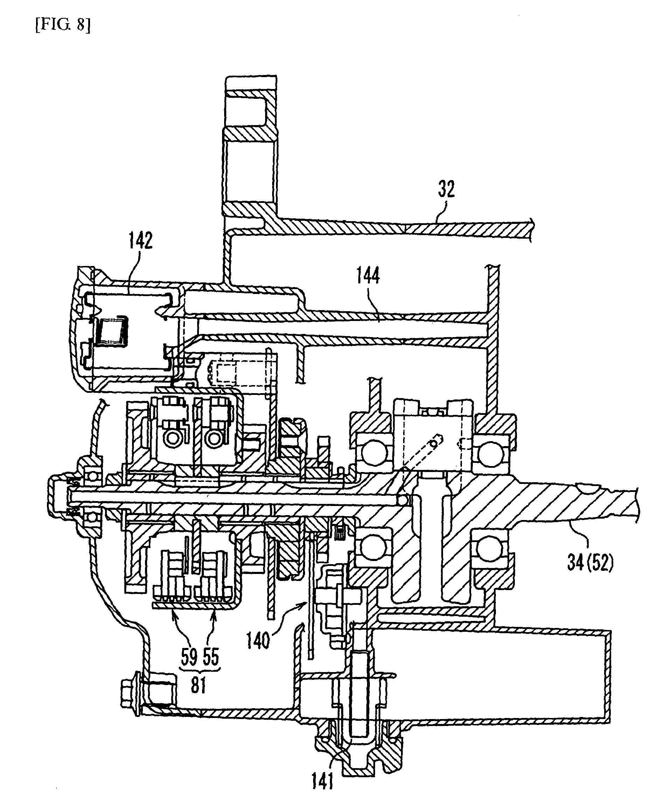

As shown in FIG. 7, an oil pump 140 applies and regulates the pressure in the working chamber 133 of the fourth clutch 66 and the pressure in the working chamber 137 of the third clutch 70. As shown in FIG. 7, an oil reservoir 99 is formed at the bottom of the crank chamber 35. A strainer 141, which is also shown in FIG. 8, is immersed in the oil reservoir 99. The strainer 141 is connected to the oil pump 140. When the oil pump 140 is driven, the oil accumulated in the oil reservoir 99 is pumped up via the strainer 141.

A relief valve 147 is provided in the middle of a first oil path 144. The pumped oil is purified by an oil cleaner 142, and is regulated to a predetermined pressure by the relief valve 147. After that, a part of the purified oil is supplied to the crank shaft 34 and to a sliding section in the cylinder head 40. Further, a part of the purified oil is also supplied to the working chamber 133 of the fourth clutch 66 and the working chamber 137 of the third clutch 70. More specifically, a second oil path 145 and a third oil path 146 are connected to the first oil path 144 that extends from the oil cleaner 142. The second oil path 145 extends from a valve 143, and passes on the crank case 32 side. Then, from the right end of the second rotation shaft 54, it extends through the inside of the second rotation shaft 54. Then, the second oil path 145 reaches the working chamber 133. Accordingly, the oil is supplied to the working chamber 133 via the second oil path 145, and the pressure in the working chamber 133 is regulated. On the other hand, the third oil path 146 extends from the valve 143 and passes on the transmission cover 50 side. Then, from the left end of the second rotation shaft 54, it extends through the inside of the second rotation shaft 54. Then, the third oil path 146 reaches the working chamber 137. Accordingly, the oil is supplied to the working chamber 137 via the third oil path 146.

The valve 143 is provided at the connecting section of the first oil path 144, the second oil path 145, and the third oil path 146. The valve 143 opens and closes between the first oil path 144 and the third oil path 146, and between the first oil path 144 and the second oil path 145.

As shown in FIG. 6, a motor 150 that drives the valve 143 is attached to the valve 143. The motor 150 drives the valve 143, whereby the third clutch 70 and the fourth clutch 66 are engaged/disengaged. That is, in this embodiment, the oil pump 140, the valve 143, and the motor 150 form an actuator 103 that applies hydraulic pressure to the third clutch 70 and the fourth clutch 66 that are hydraulic clutches. The actuator 103 is controlled by an ECU 138 shown in FIG 6, and used to turn the third clutch 70 and the fourth clutch 66 ON/OFF. More specifically, the actuator 103 applies hydraulic pressure to the working chamber 133 and the working chamber 137 as necessary, thus engaging/disengaging the third clutch 70 and the fourth clutch 66.

To be more specific, as shown in FIG. 6, a throttle opening degree sensor 112 and the vehicle speed sensor 88 are connected to the ECU 138. The ECU 138 serving as a control portion controls the actuator 103 based on at least one of the throttle opening degree detected by the throttle opening degree sensor 112 and the vehicle speed detected by the vehicle speed sensor 88. By controlling the actuator 103 in this way, the ECU 138 controls the timing at which the third clutch 70 and the fourth clutch 66 are engaged. In this embodiment, the ECU 138 serving as the control portion controls the actuator 103 based on both the throttle opening degree detected by the throttle opening degree sensor 112 and the vehicle speed detected by the vehicle speed sensor 88. More specifically, the ECU 138 controls the actuator 103 based on information that is obtained by applying the throttle opening degree output from the throttle opening degree sensor 112 and the vehicle speed output from the vehicle speed sensor 88 to a V-N diagram read from a memory 113.

Specifically, the valve 143 is formed in a generally cylindrical shape. An internal path 148 for connecting the first oil path 144 and the second oil path 145, and an internal path 149 for connecting the first oil path 144 and the third oil path 146 are formed in the valve 143. The internal paths 148 and 149 are designed to select one of the following positions when the valve 143 is rotated by the motor 150: a position where the first oil path 144 and the second oil path 145 are connected, while the first oil path 144 and the third oil path 146 are disconnected; a position where the first oil path 144 and the third oil path 146 are connected, while the first oil path 144 and the second oil path 145 are disconnected; and a position where the first oil path 144 and the third oil path 146 are disconnected, and the first oil path 144 and the second oil path 145 are also disconnected. Thus, one of the following states is selected: a state where both the fourth clutch 66 and the third clutch 70 are disengaged; a state where the fourth clutch 66 is engaged, while the third clutch 70 is disengaged; and a state where the fourth clutch 66 is disengaged, while the third clutch 70 is engaged.

### - Operation of the transmission 31 -

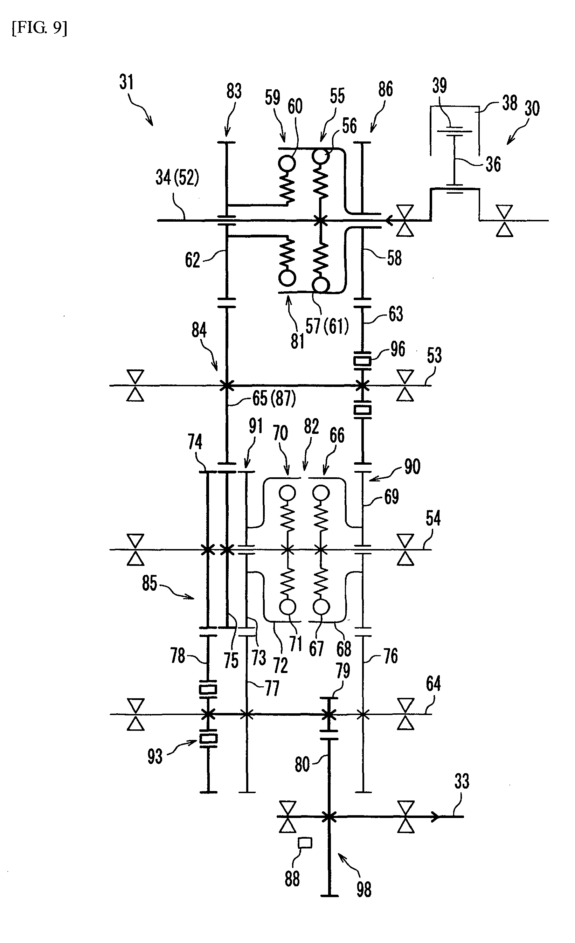

Next, the operation of the transmission 31 will be described in detail with reference to FIG. 9 to FIG. 12.

### - First speed when starting from standstill -

First, when the engine 30 is started, the crank shaft 34 (i.e., the input shaft 52) starts to rotate. The inner 56 of the first clutch 55 rotates together with the input shaft 52. Therefore, when the rotation speed of the input shaft 52 becomes equal to or higher than a predetermined rotation speed (i.e., the first rotation speed), and a centrifugal force equal to or larger than a predetermined magnitude is applied to the inner 56, the first clutch 55 is engaged as shown in FIG. 9. When the first clutch 55 is engaged, the first pair of shift gears 86 rotates together with the outer 57 of the first clutch 55. Thus, the rotation of the input shaft 52 is transmitted to the first rotation shaft 53.

The ninth gear 87 rotates together with the first rotation shaft 53. Accordingly, the first pair of transmission gears 84 also rotates along with the rotation of the first rotation shaft 53. Thus, the rotation of the first rotation shaft 53 is transmitted to the second rotation shaft 54 via the first pair of transmission gears 84.

The seventh gear 74 rotates together with the second rotation shaft 54. Accordingly, the second pair of transmission gears 85 also rotates along with the rotation of the second rotation shaft 54. Thus, the rotation of the second rotation shaft 54 is transmitted to the third rotation shaft 64 via the second pair of transmission gears 85.

The thirteenth gear 79 rotates together with the third rotation shaft 64. Accordingly, the third pair of transmission gears 98 also rotates along with the rotation of the third rotation shaft 64. Thus, the rotation of the third rotation shaft 64 is transmitted to the output shaft 33 via the third pair of transmission gears 98.

In this manner, when the scooter type vehicle 1 is started from standstill, that is, in the first speed, rotation is transmitted from the input shaft 52 to the output shaft 33 via the first clutch 55, the first pair of shift gears 86, the first pair of transmission gears 84, the second pair of transmission gears 85, and the third pair of transmission gears 98, as shown in FIG. 9.

### - Second speed -

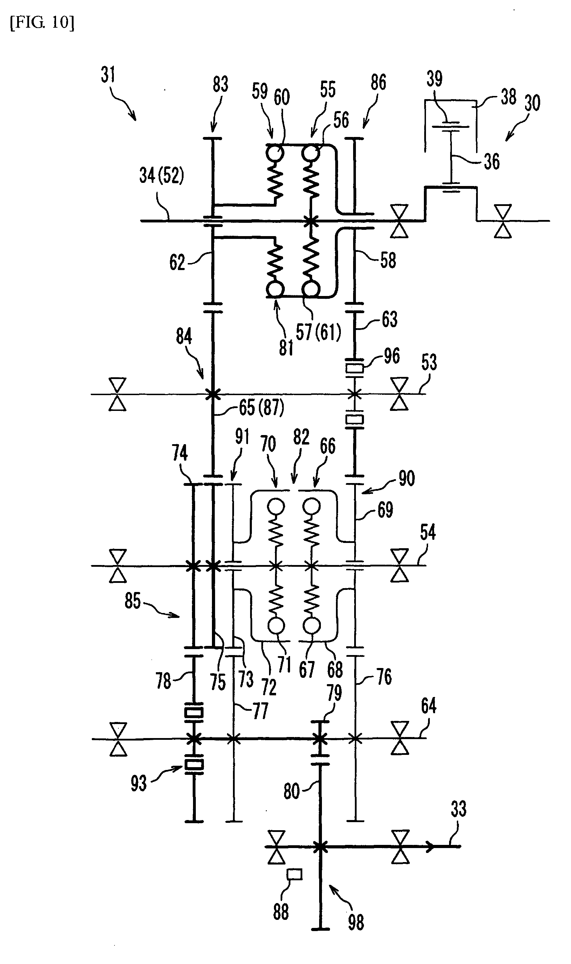

In the first speed, the twelfth gear 65 common with the ninth gear 87 rotates together with the first rotation shaft 53. Therefore, the eleventh gear 62 meshing with the twelfth gear 65 and the inner 60 of the second clutch 59 also rotate together. Accordingly, as the rotation speed of the input shaft 52 increases, the rotation speed of the inner 60 of the second clutch 59 also increases. When the rotation speed of the input shaft 52 becomes equal to or higher than the second rotation speed that is higher than the first rotation speed, the rotation speed of the inner 60 also increases accordingly, and the second clutch 59 is engaged as shown in FIG. 10.

Note that, in this embodiment, the gear ratio of the fourth pair of shift gears 83 is smaller than the gear ratio of the first pair of shift gears 86. As a result, the rotation speed of the twelfth gear 65 is higher than the rotation speed of the second gear 63. Accordingly, rotation is transmitted from the input shaft 52 to the first rotation shaft 53 via the fourth pair of shift gears 83. On the other hand, the rotation of the first rotation shaft 53 is not transmitted to the input shaft 52 by the one-way rotation transmission mechanism 96.

The rotation force is transmitted from the first rotation shaft 53 to the output shaft 33, in the same manner as in the first speed, via the first pair of transmission gears 84, the second pair of transmission gears 85, and the third pair of transmission gears 98.

In this manner, in the second speed, rotation is transmitted from the input shaft 52 to the output shaft 33 via the second clutch 59, the fourth pair of shift gears 83, the first pair of transmission gears 84, the second pair of transmission gears 85, and the third pair of transmission gears 98, as shown in FIG. 10.

### - Third speed -

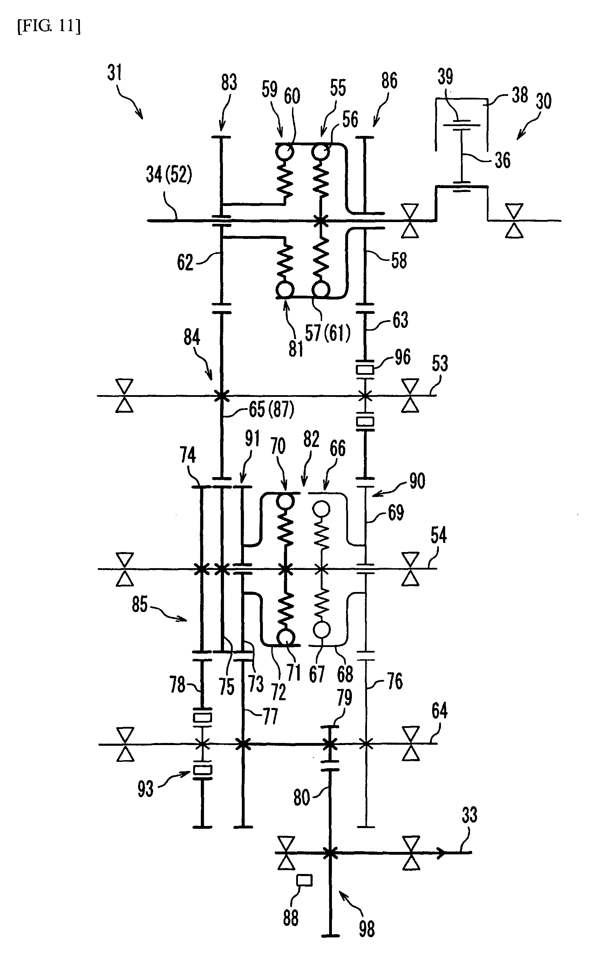

In the second speed, when the rotation speed of the crank shaft 34 (i.e., the input shaft 52) becomes higher than the second rotation speed, and the vehicle speed becomes equal to or higher than a predetermined vehicle speed, the valve 143 is driven and the third clutch 70 is engaged, as shown in FIG. 11. As a result, the third pair of shift gears 91 starts to rotate. Note that the gear ratio of the third pair of shift gears 91 is smaller than the gear ratio of the second pair of transmission gears 85. Therefore, the rotation speed of the sixth gear 77 of the third pair of shift gears 91 becomes higher than the rotation speed of the eighth gear 78 of the second pair of transmission gears 85. Thus, the rotation of the second rotation shaft 54 is transmitted to the third rotation shaft 64 via the third pair of shift gears 91. On the other hand, the rotation of the third rotation shaft 64 is not transmitted to the second rotation shaft 54 by the one-way rotation transmission mechanism 93.

The rotation of the third rotation shaft 64 is transmitted to the output shaft 33 via the third pair of transmission gears 98, in the same manner as in the first speed and the second speed.

In this manner, in the third speed, rotation is transmitted from the input shaft 52 to the output shaft 33 via the second clutch 59, the fourth pair of shift gears 83, the first pair of transmission gears 84, the third clutch 70, the third pair of shift gears 91, and the third pair of transmission gears 98, as shown in FIG. 11.

### - Fourth speed -

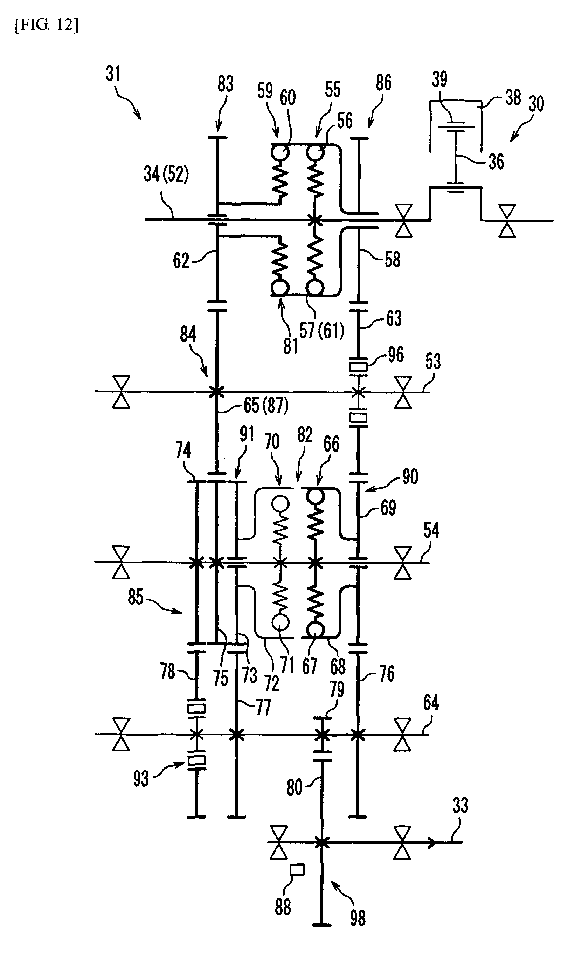

In the third speed, when the rotation speed of the crank shaft 34 (i.e., the input shaft 52) further increases and the vehicle speed further increases as well, the valve 143 is driven and the fourth clutch 66 is engaged as shown in FIG 12. On the other hand, the third clutch 70 is disengaged. As a result, the second pair of shift gears 90 starts to rotate. Note that the gear ratio of the second pair of shift gears 90 is also smaller than the gear ratio of the second pair of transmission gears 85. Therefore, the rotation speed of the fourth gear 76 of the second pair of shift gears 90 becomes higher than the rotation speed of the eighth gear 78 of the second pair of transmission gears 85. Thus, the rotation of the second rotation shaft 54 is transmitted to the third rotation shaft 64 via the second pair of shift gears 90. On the other hand, the rotation of the third rotation shaft 64 is not transmitted to the second rotation shaft 54 by the one-way rotation transmission mechanism 93.

The rotation of the third rotation shaft 64 is transmitted to the output shaft 33 via the third pair of transmission gears 98, in the same manner as in the first speed to the third speed.

In this manner, in the fourth speed, rotation is transmitted from the input shaft 52 to the output shaft 33 via the second clutch 59, the fourth pair of shift gears 83, the first pair of transmission gears 84, the fourth clutch 66, the second pair of shift gears 90, and the third pair of transmission gears 98, as shown in FIG. 12.

### «Second Embodiment»

In the above-described first embodiment, as an example of the preferred embodiment of the invention, the scooter type vehicle 1 is described. However, in the invention, the motorcycle is not limited to a scooter type vehicle. In a second embodiment, as an example of the preferred embodiment of the present invention, a moped 2 will be described. Note that, in the description of the second embodiment, structural members that have a common function will be explained using reference numerals in common with the first embodiment. FIG 4, FIG. 7, and FIG. 9 to FIG. 12 will be used along with the first embodiment for reference.

### (Schematic structure of the moped 2)

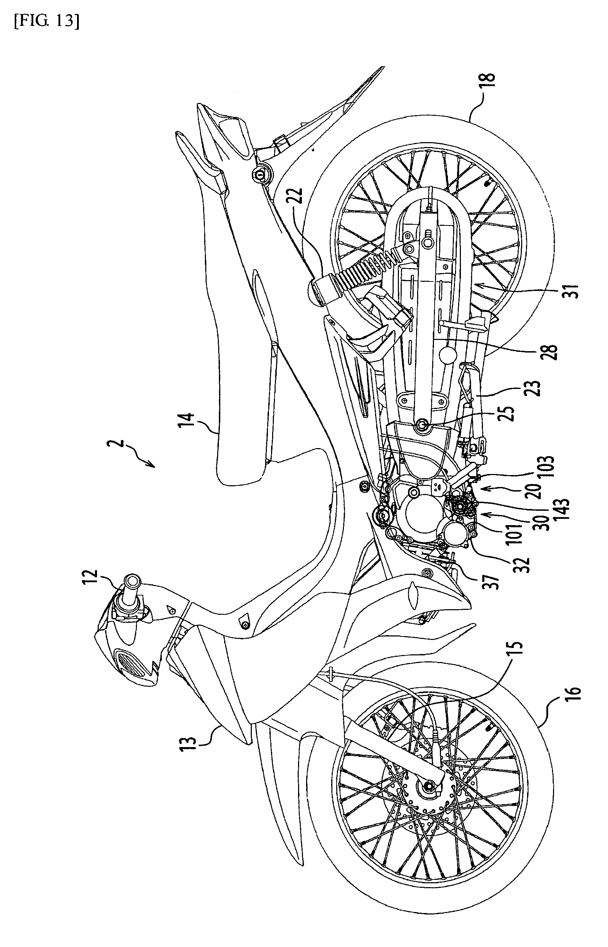

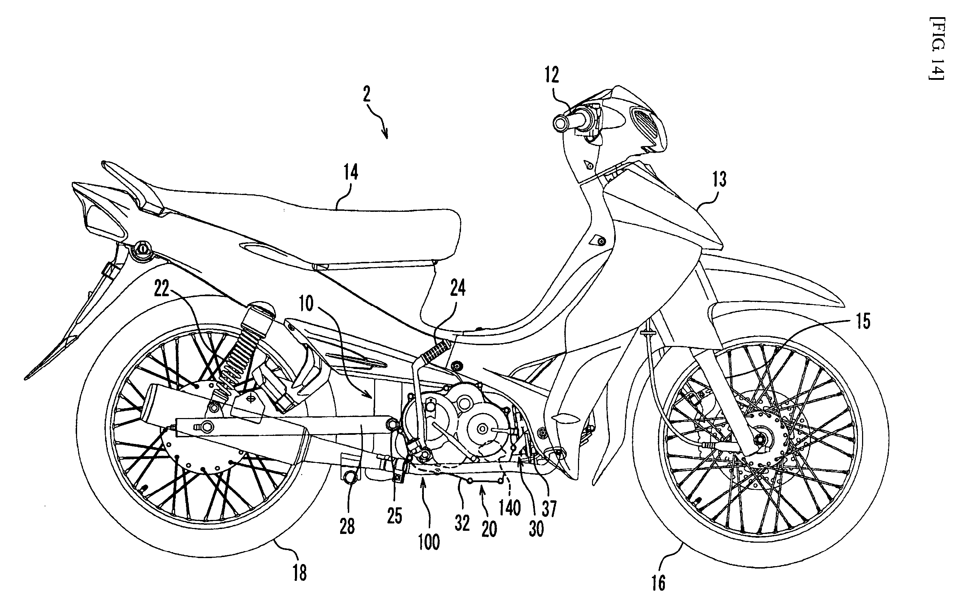

First, the schematic structure of the moped 2 will be described with reference to FIG. 13 and FIG. 14. Note that, the terms front and rear, and left and right as used in the following description indicate the front and rear and the left and right as viewed by the rider seated on a seat 14 of the moped 2.

As shown in FIG. 14, the moped 2 is provided with the body frame 10. The body frame 10 includes a head pipe (not shown in the figure). The head pipe extends downward in a front section of the vehicle such that it is slightly inclined to the front. A steering shaft (not shown in the figure) is rotatably inserted to the head pipe. A handle 12 is provided at the upper end of the steering shaft. In addition, a front fork 15 is connected to the lower end of the steering shaft. A front wheel 16 serving as a driven wheel is rotatably attached to the lower end of the front fork 15.

A body cover 13 is attached to the body frame 10. The body cover 13 covers a part of the body frame 10. The seat 14 on which the rider sits is attached to the body cover 13. Further, a side stand 23 is attached to the body frame 10 substantially at the center of the vehicle.

An engine unit 20 is suspended from the body frame 10. In this embodiment, the engine unit 20 is fixed to the body frame 10. That is, the engine unit 20 is an engine unit of a rigid type. While the engine unit 20 of the first embodiment has a relatively long length in the front-rear direction, the engine unit 20 of the second embodiment has a relatively short length in the front-rear direction. More specifically, in the transmission 31 of the engine unit 20 of the first embodiment, the distance between the input shaft 52 and the output shaft 33 is relatively long. On the other hand, in a transmission 31 of the engine unit 20 of the second embodiment, the distance between an input shaft 52 and an output shaft 33 is relatively short. Therefore, the engine unit 20 of the second embodiment is particularly useful for use in a moped, an off-road vehicle, an on-road vehicle, etc. for which a relatively high driving performance is required compared to a scooter type vehicle.

A rear arm 28 that extends rearward is attached to the body frame 10. The rear arm 28 can swing around a pivot shaft 25. A rear wheel 18 serving as a driving wheel is rotatably attached to the rear end of the rear arm 28. The rear wheel 18 is connected to the output shaft 33 of the transmission 31 by power transmitting means (not shown in the figures). Thus, the rear wheel 18 is driven by the engine unit 20. Further, one end of a cushion unit 22 is attached to the rear end of the rear arm 28. The other end of the cushion unit 22 is attached to the body frame 10. This cushion unit 22 suppresses swinging movement of the rear arm 28.

As shown in FIG 4, in this embodiment, a vehicle speed sensor 88 is provided on the output shaft 33. More specifically, the vehicle speed sensor 88 is provided on a fourteenth gear 80 that rotates together with the output shaft 33. However, the vehicle speed sensor 88 may be provided on a rotation shaft other than the output shaft 33. The vehicle speed sensor 88 may be provided on another member that rotates at a given rotation ratio with respect to the output shaft 33.

### (Structure of the engine unit 20)

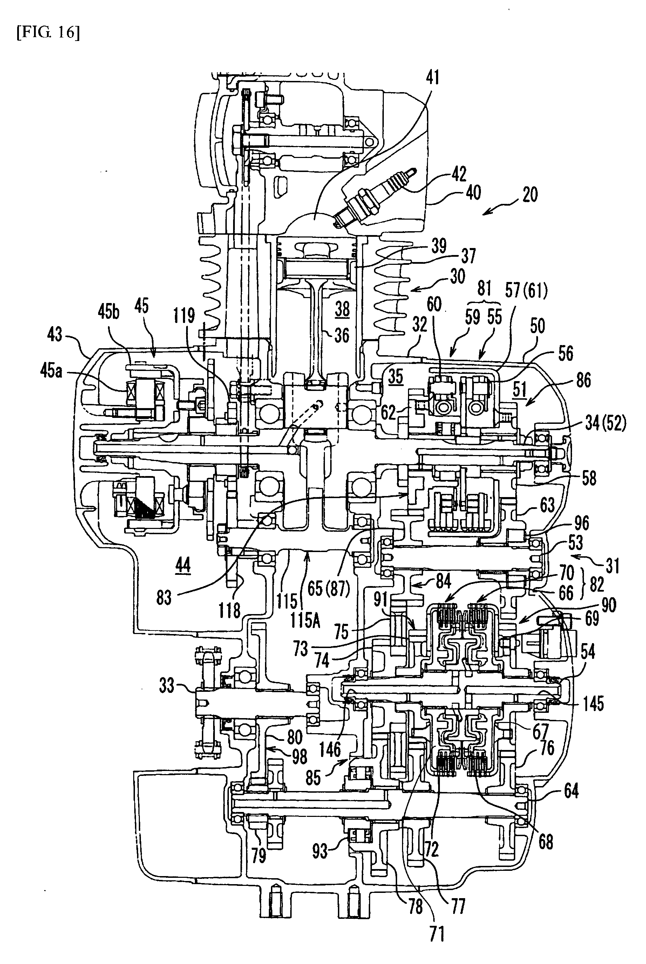

FIG. 16 is a cross sectional view of the engine unit 20. FIG. 4 is a schematic diagram showing the structure of the engine unit 20. As shown in FIG. 16, the engine unit 20 includes an engine 30 and the transmission 31. Note that, in the second embodiment, an example is described in which the engine. 30 is a single cylinder engine. However, in the invention, the engine 30 is not limited to a single cylinder engine. The engine 30 may be a multi-cylinder engine, such as a two cylinder engine.

### - Engine 30 -

The engine 30 includes a crank case 32, a cylinder body 37, a cylinder head 40, and a crank shaft 34. A crank chamber 35 is defined in the crank case 32. A cylinder 38 that opens to the crank chamber 35 is defined in the cylinder body 37. The cylinder head 40 is attached to the tip end of the cylinder body 37. The crank shaft 34 that extends in the vehicle width direction is disposed in the crank chamber 35. A connecting rod 36 is attached to the crank shaft 34. A piston 39 disposed in the cylinder 38 is attached to a tip end of the connecting rod 36. A combustion chamber 41 is defined by the piston 39, the cylinder body 37, and the cylinder head 40. A spark plug 42 is attached to the cylinder head 40 such that an ignition section at the tip end of the spark plug 42 is located in the combustion chamber 41.

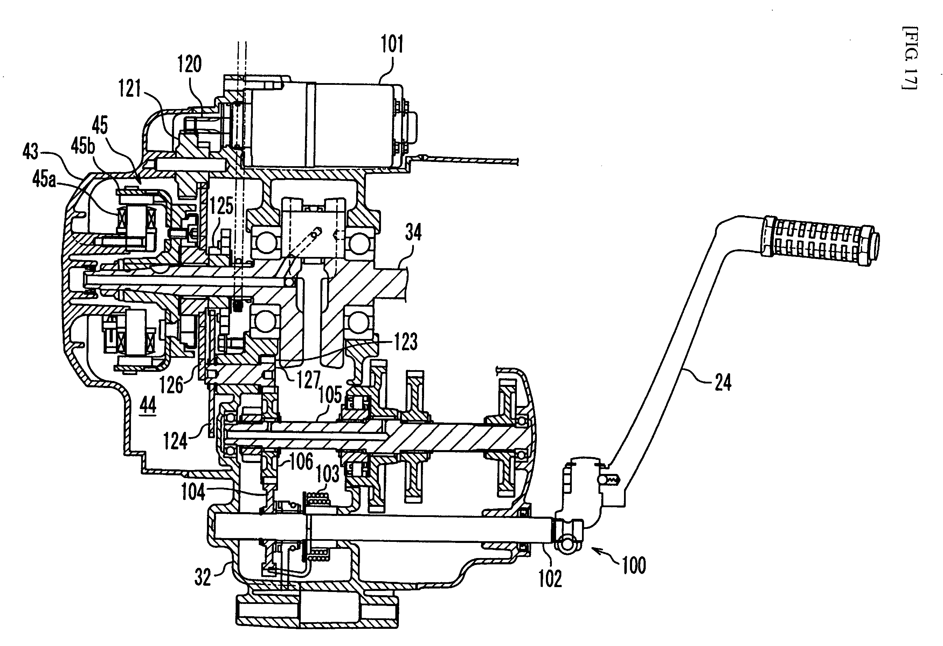

FIG. 17 is a partial cross sectional view of the engine unit 20 that shows a kick starter 100 and a starter 101. As shown in FIG. 14 and FIG. 17, the engine unit 20 is provided with the kick starter 100. The rider of the moped 2 can start the engine 30 by operating the kick starter 100.

The kick starter 100 includes a kick pedal 24. As shown in FIG. 14, the kick pedal 24 is provided to the rear of and below the crank shaft 34, on the right side of the crank case 32. The kick pedal 24 is attached to a kick shaft 102. A compression coil spring 103 is provided between the kick shaft 102 and the crank case 32. The compression coil spring 103 applies, to the kick shaft 102 rotated by the rider's operation, an urging force in a reverse rotating direction. Further, a gear 104 is provided on the kick shaft 102. On the other hand, a gear 106 is rotatably provided on a shaft 105. The gear 104 meshes with the gear 106. Rotation of the kick shaft 102 is transmitted to the crank shaft 34 via the gear 104. Further, the gear 106 meshes with a gear 123 provided on a shaft 127. Accordingly, the rotation of the gear 104 is transmitted to the shaft 127 via the gear 106 and the gear 123. A gear 124 is provided on the shaft 127. The gear 124 meshes with a gear 125 provided on the crank shaft 34. Accordingly, the rotation of the shaft 127 is transmitted to the crank shaft 34 via the gear 124 and the gear 125. Therefore, the crank shaft 34 is rotated by the rider operating the kick pedal 24.

In addition, the starter 101 is also provided in the engine 30. The starter 101 is attached to the crank case 32. The rotation of the starter 101 is transmitted to the crank shaft 34 via gears 120, 121, and 126. Thus, when the starter 101 is driven by the rider's operation, the engine 30 is started.

### - Balancer shaft 115 -

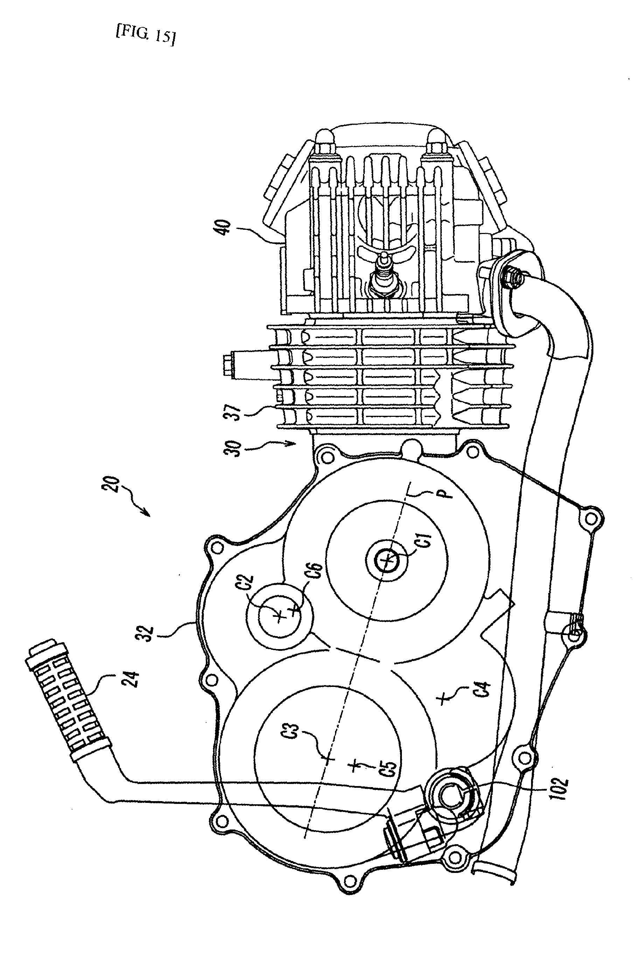

As shown in FIG. 16, a balancer 115A having a balancer shaft 115 is provided in the engine 30. A gear 118 is provided on the balancer shaft 115. The gear 118 meshes with a gear 119 provided on the crank shaft 34. Accordingly, the balancer shaft 115 rotates together with the crank shaft 34. As shown in FIG. 16 and FIG. 15, an axis C6 of the balancer shaft 115 is provided close to an axis C2 of a second rotation shaft 54. As shown in FIG. 16, when viewed from the axial direction of a first rotation shaft 53, at least a part of the first rotation shaft 53, a second gear 63, or a ninth gear 87, and at least a part of the balancer 115A are disposed to overlap with each other. Particularly, the balancer shaft 115 is disposed so that at least a part thereof overlaps with the first rotation shaft 53 when viewed from the axial direction of the first rotation shaft 53. The balancer shaft 115 is located at the center, in the vehicle width direction, of the crank shaft 34 to which a connecting rod 36 is connected. On the other hand, the first rotation shaft 53 is located on the right side in the vehicle width direction. The balancer shaft 115 and the first rotation shaft 53 are offset in the vehicle width direction. In other words, the balancer shaft 115 and the first rotation shaft 53 are disposed so as not to overlap with each other in the vehicle width direction.

### - Generator 45 -

As shown in FIG. 16 and FIG. 17, a generator cover 43 is attached to the left side of the crank case 32. A generator housing 44 is defined by the generator cover 43 and the crank case 32.

The left end of the crank shaft 34 protrudes from the crank chamber 35 and reaches the generator housing 44. The generator 45 is attached to the left end of the crank shaft 34 in the generator housing 44. The generator 45 includes an inner 45a and an outer 45b. The inner 45a is attached such that it cannot rotate with respect to the crank case 32. Note that, the outer 45b is attached to the left end of the crank shaft 34. The outer 45b rotates together with the crank shaft 34. Accordingly, when the crank shaft 34 rotates, the outer 45b rotates relatively with respect to the inner 45a. Thus, power generation is performed.

A transmission cover 50 is attached to the right side of the crank case 32. The transmission cover 50 and the crank case 32 define a transmission housing 51 located on the left side of the crank case 32.

### - Structure of the transmission 31 -

Next, mainly referring to FIG. 4, the structure of the transmission 31 will be described in detail. The transmission 31 is a four-speed stepped automatic transmission that includes the input shaft 52 and the output shaft 33. The transmission 31 is a gear train stepped transmission in which power is transmitted from the input shaft 52 to the output shaft 33 via a plurality of pairs of shift gears.

The right end of the crank shaft 34 protrudes from the crank chamber 35, and reaches the transmission housing 51. The crank shaft 34 also serves as the input shaft 52 of the transmission 31.

### - Structure of the rotation shafts -

The transmission 31 has the first rotation shaft 53, the second rotation shaft 54, a third rotation shaft 64, and the output shaft 33. The first rotation shaft 53, the second rotation shaft 54, the third rotation shaft 64, and the output shaft 33 are respectively provided in parallel with the input shaft 52.

In FIG. 15, the reference numerals C1, C2, C3, C4, and C5 respectively represent the axis of the input shaft 52, the axis of the first rotation shaft 53, the axis of the second rotation shaft 54, the axis of the third rotation shaft 64, and the axis of the output shaft 33. As shown in FIG. 15, all of the rotation shafts of the input shaft 52, the first rotation shaft 53, the second rotation shaft 54, and the third rotation shaft 64 are arranged adjacent to each other, in a side view. In other words, the input shaft 52, the first rotation shaft 53, the second rotation shaft 54, and the third rotation shaft 64 are arranged such that the axis C1 of the input shaft 52, the axis C2 of the first rotation shaft 53, the axis C3 of the second rotation shaft 54, and the axis C4 of the third rotation shaft 64 form a rectangular shape in a side view.

As shown in FIG. 15, at least one of the axis C2 of the first rotation shaft 53 and the axis C4 of the third rotation shaft 64 is not located on a plane P that includes the axis C1 of the input shaft 52 and the axis C3 of the second rotation shaft 54. In more detail, the axis C2 of the first rotation shaft 53 is located on one side of the plane P, while the axis C4 of the third rotation shaft 64 is located on the other side of the plane P. More specifically, the axis C2 of the first rotation shaft 53 is located on the upper side of the plane P, while the axis C4 of the third rotation shaft 64 is located on the lower side of the plane P. Therefore, the axis C2 of the first rotation shaft 53 is located at a position that is relatively further upward, while the third rotation shaft 64 is located at a position that is relatively further downward.

The axis C4 of the third rotation shaft 64 is located in front of the axis C3 of the second rotation shaft 54, in the front-rear direction. In more detail, the axis C4 of the third rotation shaft 64 is located between the axis C3 of the second rotation shaft 54 and the axis C1 of the input shaft 52, in the front-rear direction.

As shown in FIG. 15, the axis C5 of the output shaft 33 is located above and to the rear of the axis C4 of the third rotation shaft 64. In a side view, the axis C5 of the output shaft 33 is located outside of a virtual rectangle formed by the axis C1 of the input shaft 52, the axis C2 of the first rotation shaft 53, the axis C3 of the second rotation shaft 54, and the axis C4 of the third rotation shaft 64. The axis C5 of the output shaft 33 is located, in a side view, to the rear of the axis C3 of the second rotation shaft 54.

Note that the plane P extends upward to the rear. That is, the axis C3 of the second rotation shaft 54 is located in a higher position than the axis C1 of the input shaft 52.

Note that, in the second embodiment, an example will be described in which the output shaft 33 and the third rotation shaft 64 are separately provided. However, the invention is not limited to this structure. The output shaft 33 and the third rotation shaft 64 may be common. In other words, the rear wheel 18 may be attached to the third rotation shaft 64.

### - A group of clutches 81 on the upstream side -

As shown in FIG 16 and FIG. 4, the input shaft 52 is provided with a group of clutches 81 on the upstream side. The group of clutches 81 on the upstream side includes a first clutch 55 and a second clutch 59. The first clutch 55 is disposed on the right side of the second clutch 59. The first clutch 55 and the second clutch 59 are centrifugal clutches. More specifically, in the first embodiment, the first clutch 55 and the second clutch 59 are drum type centrifugal clutches. However, the invention is not limited to this structure. The second clutch 59 may be a clutch other than a centrifugal clutch. For example, the second clutch 59 may be a hydraulic clutch.

The first clutch 55 includes an inner 56 as an input side clutch member, and an outer 57 as an output side clutch member. The inner 56 is provided such that it cannot rotate with respect to the input shaft 52. Accordingly, the inner 56 rotates together with the input shaft 52. On the other hand, the outer 57 can rotate with respect to the input shaft 52. When the rotation speed of the input shaft 52 becomes higher than a predetermined rotation speed, the inner 56 and the outer 57 come into contact due to centrifugal force acting on the inner 56. Thus, the first clutch 55 is engaged. On the other hand, when the inner 56 and the outer 57 are rotating in the engaged state, if the rotation speed thereof becomes lower than the predetermined rotation speed, the centrifugal force acting on the inner 56 is reduced. As a result, the inner 56 and the outer 57 separate. Thus, the first clutch 55 is disengaged.

The second clutch 59 includes an inner 60 as an output side clutch member, and an outer 61 as an input side clutch member. The inner 60 is provided such that it cannot rotate with respect to an eleventh gear 62 to be described later. When the input shaft 52 rotates, the rotation is transmitted to the inner 60 via a first pair of shift gears 86, the first rotation shaft 53, and a fourth pair of shift gears 83. Accordingly, the inner 60 rotates together with the rotation of the input shaft 52. The outer 61 can rotate with respect to the input shaft 52. When the rotation speed of the input shaft 52 becomes higher than a predetermined rotation speed, the inner 60 and the outer 61 come into contact due to centrifugal force acting on the inner 60. Thus, the second clutch 59 is engaged. On the other hand, when the inner 60 and the outer 61 are rotating in the engaged state, if the rotation speed thereof becomes lower than the predetermined rotation speed, the centrifugal force acting on the inner 60 is reduced. As a result, the inner 60 and the outer 61 separate. Thus, the second clutch 59 is disengaged.

Note that, in the second embodiment, the outer 57 and the outer 61 are formed by the same member. However, the invention is not limited to this structure. The outer 57 and the outer 61 may be formed by separate members.

The rotation speed of the input shaft 52 when the first clutch 55 is engaged, and the rotation speed of the input shaft 52 when the second clutch 59 is engaged are different from each other. In other words, the rotation speed of the inner 56 when the first clutch 55 is engaged, and the rotation speed of the inner 60 when the second clutch 59 is engaged are different from each other. More specifically, the rotation speed of the input shaft 52 when the first clutch 55 is engaged is lower than the rotation speed of the input shaft 52 when the second clutch 59 is engaged. To be more specific, the first clutch 55 is engaged when the rotation speed of the input shaft 52 is equal to or higher than a first rotation speed. On the other hand, the first clutch 55 is disengaged when the rotation speed of the input shaft 52 is lower than the first rotation speed. The second clutch 59 is engaged when the rotation speed of the input shaft 52 is equal to or higher than a second rotation speed that is higher than the first rotation speed. On the other hand, the second clutch 59 is disengaged when the rotation speed of the input shaft 52 is lower than the second rotation speed.

A first gear 58 is provided on the outer 57 of the first clutch 55 such that it cannot rotate with respect to the outer 57. The first gear 58 rotates together with the outer 57 of the first clutch 55. In addition, a second gear 63 is provided on the first rotation shaft 53. The second gear 63 meshes with the first gear 58. The first gear 58 and the second gear 63 form the first pair of shift gears 86. In this embodiment, the first pair of shift gears 86 is a pair of first speed shift gears.

The second gear 63 is a one-way gear. More specifically, the second gear 63 transmits the rotation of the first gear 58 to the first rotation shaft 53. On the other hand, the second gear 63 does not transmit the rotation of the first rotation shaft 53 to the input shaft 52. That is, the second gear 63 also serves as a one-way rotation transmission mechanism 96.

The eleventh gear 62 is provided on the inner 60 that is an output side clutch member of the second clutch 59. The eleventh gear 62 rotates together with the inner 60. In addition, a twelfth gear 65 is provided on the first rotation shaft 53. The twelfth gear 65 meshes with the eleventh gear 62. The twelfth gear 65 and the eleventh gear 62 form the fourth pair of shift gears 83. The fourth pair of shift gears 83 has a gear ratio different from that of the first pair of shift gears 86. More specifically, the fourth pair of shift gears 83 has a gear ratio smaller than that of the first pair of shift gears 86. The fourth pair of shift gears 83 is a pair of second speed shift gears.

Between the first pair of shift gears 86 and the fourth pair of shift gears 83, the first clutch 55 and the second clutch 59 are located. In other words, the first clutch 55 and the second clutch 59 are disposed between the first pair of shift gears 86 and the fourth pair of shift gears 83.

In this embodiment, the twelfth gear 65 also functions as a ninth gear 87. In other words, the twelfth gear 65 and the ninth gear 87 are common. A tenth gear 75 is provided on the second rotation shaft 54 such that it cannot rotate with respect to the second rotation shaft 54. The tenth gear 75 rotates together with the second rotation shaft 54. The ninth gear 87 that also functions as the twelfth gear 65 meshes with the tenth gear 75. The ninth gear 87 that also functions as the twelfth gear 65 and the tenth gear 75 form a first pair of transmission gears 84.

A seventh gear 74 is provided on the second rotation shaft 54 such that it cannot rotate with respect to the second rotation shaft 54. The seventh gear 74 rotates together with the second rotation shaft 54. Moreover, an eighth gear 78 is provided on the third rotation shaft 64 such that it cannot rotate with respect to the third rotation shaft 64. The third rotation shaft 64 rotates together with the eighth gear 78. The seventh gear 74 and the eighth gear 78 mesh with each other. The seventh gear 74 and the eighth gear 78 form a second pair of transmission gears 85.

The eighth gear 78 is a one-way gear. More specifically, the eighth gear 78 transmits rotation of the second rotation shaft 54 to the third rotation shaft 64. On the other hand, the eighth gear 78 does not transmit rotation of the third rotation shaft 64 to the second rotation shaft 54. That is, the eighth gear 78 also serves as a one-way rotation transmission mechanism 93.

Note that it is not essential in the invention that the eighth gear 78 is a one-way gear. For example, a structure may be adopted in which the eighth gear 78 is a normal gear, and the seventh gear 74 is a one-way gear. In other words, the seventh gear 74 may also serve as a one-way rotation transmission mechanism. More specifically, a structure may be adopted in which the seventh gear 74 transmits the rotation of the second rotation shaft 54 to the eighth gear 78, but it does not transmit the rotation of the eighth gear 78 to the second rotation shaft 54.

### - A group of clutches 82 on the downstream side -

The second rotation shaft 54 is provided with a group of clutches 82 on the downstream side. The group of clutches 82 on the downstream side is located to the rear of the group of clutches 81 on the upstream side. As shown in FIG. 16, the group of clutches 82 on the downstream side and the group of clutches 81 on the upstream side are disposed at locations where they at least partially overlap in the axial direction of the input shaft 52. In other words, the group of clutches 82 on the downstream side and the group of clutches 81 on the upstream side are disposed at locations where they at least partially overlap in the vehicle width direction. In more detail, the group of clutches 82 on the downstream side and the group of clutches 81 on the upstream side are disposed at locations where they substantially overlap in the vehicle width direction.

The group of clutches 82 on the downstream side includes a third clutch 70 and a fourth clutch 66. The fourth clutch 66 is disposed on the right side of the third clutch 70. Therefore, the direction in which the first clutch 55 is located with respect to the second clutch 59 is the same as the direction in which the fourth clutch 66 is located with respect to the third clutch 70. As shown in FIG 16, the first clutch 55 and the fourth clutch 66 are disposed so that they at least partially overlap in the vehicle width direction. In other words, the first clutch 55 and the fourth clutch 66 are disposed so that they at least partially overlap in the axial direction of the input shaft 52. Also, the second clutch 59 and the third clutch 70 are disposed so that they at least partially overlap in the vehicle width direction. In other words, the second clutch 59 and the third clutch 70 are disposed so that they at least partially overlap in the axial direction of the input shaft 52. Specifically, the first clutch 55 and the fourth clutch 66 are disposed so that they substantially overlap in the vehicle width direction. Also, the second clutch 59 and the third clutch 70 are disposed so that they substantially overlap in the vehicle width direction.

In this embodiment, the third clutch 70 and the fourth clutch 66 are hydraulic clutches. More specifically, in the first embodiment, the third clutch 70 and the fourth clutch 66 are disc type hydraulic clutches. However, the invention is not limited to this structure. The fourth clutch 66 and the third clutch 70 may be clutches other than hydraulic clutches. For example, the fourth clutch 66 and the third clutch 70 may be centrifugal clutches. However, it is preferable that the fourth clutch 66 and the third clutch 70 are hydraulic clutches.

As described above, in the invention, the first clutch 55 is a centrifugal clutch, and at least one of the second clutch 59, the third clutch 70 and the fourth clutch 66 may be a hydraulic clutch. As long as this condition is met, the second clutch 59, the third clutch 70 and the fourth clutch 66 may be drum type or disc type centrifugal clutches, or may be drum type or disc type hydraulic clutches. However, it is desirable for two or more of the second clutch 59, the third clutch 70 and the fourth clutch 66 to be hydraulic clutches. In particular, it is desirable for the second clutch 59 to be a centrifugal clutch and for the third clutch 70 and the fourth clutch 66 to be hydraulic clutches. Then, it is desirable for the third clutch 70 and the fourth clutch 66 that are hydraulic clutches to be disposed on the same rotation shaft and for the first clutch 55 and the second clutch 59 that are centrifugal clutches to be disposed on a separate rotation shaft.

The rotation speed of the second rotation shaft 54 when the third clutch 70 is engaged, and the rotation speed of the second rotation shaft 54 when the fourth clutch 66 is engaged are different from each other. In other words, the rotation speed of the inner 71 when the third clutch 70 is engaged, and the rotation speed of the inner 67 when the fourth clutch 66 is engaged are different from each other. More specifically, the rotation speed of the second rotation shaft 54 when the third clutch 70 is engaged is lower than the rotation speed of the second rotation shaft 54 when the fourth clutch 66 is engaged.

The third clutch 70 is provided with the inner 71 as an input side clutch member, and an outer 72 as an output side clutch member. The inner 71 is provided such that it cannot rotate with respect to the second rotation shaft 54. Accordingly, the inner 71 rotates together with the rotation of the second rotation shaft 54. On the other hand, the outer 72 can rotate with respect to the second rotation shaft 54. In a state where the third clutch 70 is disengaged, when the second rotation shaft 54 rotates, the inner 71 rotates together with the second rotation shaft 54, but the outer 72 does not rotate together with the second rotation shaft 54. In a state where the third clutch 70 is engaged, both the inner 71 and the outer 72 rotate together with the second rotation shaft 54.

A fifth gear 73 is attached to the outer 72 that is an output side clutch member of the third clutch 70. The fifth gear 73 rotates together with the outer 72. On the other hand, a sixth gear 77 is provided on the third rotation shaft 64 such that it cannot rotate with respect to the third rotation shaft 64. The sixth gear 77 rotates together with the third rotation shaft 64. The fifth gear 73 and the sixth gear 77 mesh with each other. Therefore, the rotation of the outer 72 is transmitted to the third rotation shaft 64 via the fifth gear 73 and the sixth gear 77.

The fifth gear 73 and the sixth gear 77 form a third pair of shift gears 91. The third pair of shift gears 91 has a gear ratio that is different from those of the first pair of shift gears 86, the fourth pair of shift gears 83, and a second pair of shift gears 90.

The third pair of shift gears 91 is located with respect to the third clutch 70 on the same side on which the fourth pair of shift gears 83 is located with respect to the second clutch 59. More specifically, the third pair of shift gears 91 is located on the left side of the third clutch 70. In a similar manner, the fourth pair of shift gears 83 is located on the left side of the second clutch 59.

Further, the third pair of shift gears 91 and the fourth pair of shift gears 83 are disposed so that they at least partially overlap with each other in the vehicle width direction. In other words, the third pair of shift gears 91 and the fourth pair of shift gears 83 are disposed so that they at least partially overlap with each other in the axial direction of the input shaft 52. More specifically, the third pair of shift gears 91 and the fourth pair of shift gears 83 are disposed so that they substantially overlap in the vehicle width direction.

The fourth clutch 66 is provided with the inner 67 as an input side clutch member and an outer 68 as an output side clutch member. The inner 67 is provided such that it cannot rotate with respect to the second rotation shaft 54. Accordingly, the inner 67 rotates together with the rotation of the second rotation shaft 54. On the other hand, the outer 68 can rotate with respect to the second rotation shaft 54. In a state where the fourth clutch 66 is disengaged, when the second rotation shaft 54 rotates, the inner 67 rotates together with the second rotation shaft 54, but the outer 68 does not rotate together with the second rotation shaft 54. In a state where the fourth clutch 66 is engaged, both of the inner 67 and the outer 68 rotate together with the second rotation shaft 54.

A third gear 69 is attached to the outer 68 that is an output side clutch member of the fourth clutch 66. The third gear 69 rotates together with the outer 68. On the other hand, a fourth gear 76 is provided on the third rotation shaft 64 such that it cannot rotate with respect to the third rotation shaft 64. The fourth gear 76 rotates together with the third rotation shaft 64. The third gear 69 and the fourth gear 76 mesh with each other. Therefore, the rotation of the outer 68 is transmitted to the third rotation shaft 64 via the third gear 69 and the fourth gear 76.

The fourth gear 76 and the third gear 69 form the second pair of shift gears 90. The second pair of shift gears 90 has a gear ratio that is different from those of the first pair of shift gears 86, the third pair of shift gears 91 and the fourth pair of shift gears 83.

Between the third pair of shift gears 91 and the second pair of shift gears 90, the third clutch 70 and the fourth clutch 66 are located. In other words, the third clutch 70 and the fourth clutch 66 are disposed between the third pair of shift gears 91 and the second pair of shift gears 90.

The second pair of shift gears 90 is located with respect to the fourth clutch 66 on the same side on which the first pair of shift gears 86 is located with respect to the first clutch 55. More specifically, the second pair of shift gears 90 is located on the right side of the fourth clutch 66. In a similar manner, the first pair of shift gears 86 is located on the right side of the first clutch 55.

Further, the second pair of shift gears 90 and the first pair of shift gears 86 are disposed so that they at least partially overlap with each other in the vehicle width direction. In other words, the second pair of shift gears 90 and the first pair of shift gears 86 are disposed so that they at least partially overlap with each other in the axial direction of the input shaft 52. More specifically, the second pair of shift gears 90 and the first pair of shift gears 86 are disposed so that they substantially overlap in the vehicle width direction.

A thirteenth gear 79 is provided on the third rotation shaft 64 such that it cannot rotate with respect to the third rotation shaft 64. The thirteenth gear 79 is disposed on the left side of the fourth gear 76 and the sixth gear 77, in the vehicle width direction. The thirteenth gear 79 rotates together with the third rotation shaft 64. On the other hand, the fourteenth gear 80 is provided on the output shaft 33 such that it cannot rotate with respect to the output shaft 33. In other words, the fourteenth gear 80 rotates together with the output shaft 33. The fourteenth gear 80 and the thirteenth gear 79 form a third pair of transmission gears 98. The third pair of transmission gears 98 transmits the rotation of the third rotation shaft 64 to the output shaft 33.

### - Detailed structure of the group of clutches 82 on the downstream side -

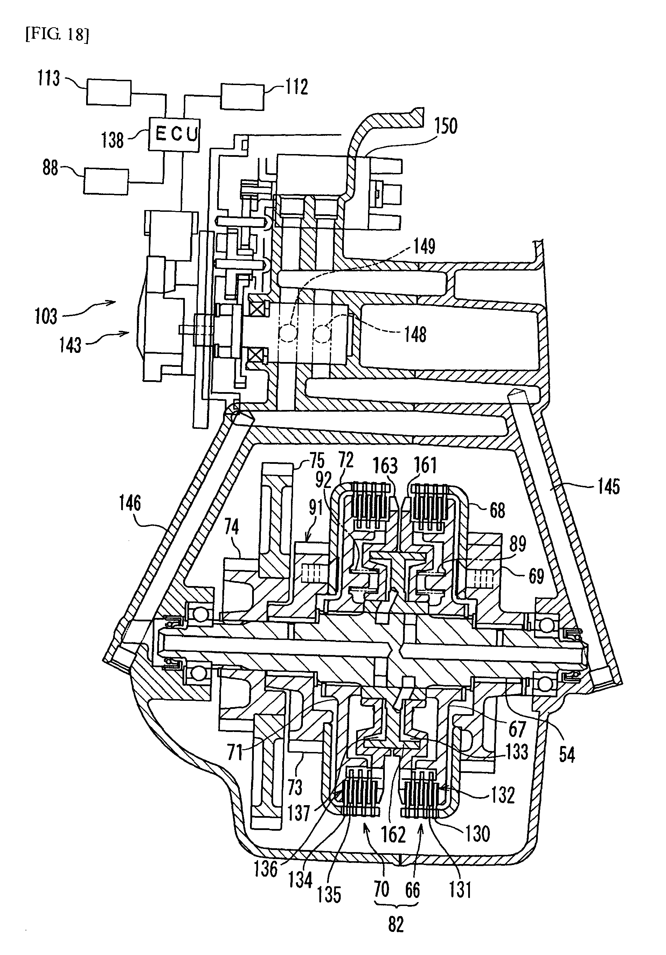

Next, referring mainly to FIG. 18, the group of clutches 82 on the downstream side will be described in further detail.

The third clutch 70 is provided with a group of plates 136. The group of plates 136 includes a plurality of friction plates 134 and a plurality of clutch plates 135. The plurality of friction plates 134 and the plurality of clutch plates 135 are alternately laminated in the vehicle width direction. The friction plates 134 cannot rotate with respect to the outer 72. Further, the clutch plates 135 cannot rotate with respect to the inner 71.

The inner 71 can rotate with respect to the outer 72. The pressure plate 163 is formed opposite to the outer 72 of the inner 71 in the vehicle width direction. The pressure plate 163 is urged to the right of the vehicle width direction by a compression coil spring 92. That is, the pressure plate 163 is urged to a boss 162 by the compression coil spring 92.

A working chamber 137 is formed between the boss 162 and the pressure plate 163. The working chamber 137 is filled with oil. As the oil pressure in the working chamber 137 is increased, the pressure plate 163 is displaced in a direction to be separate from the boss 162. By this, the distance between the pressure plate 163 and the inner 71 is short. Thus, the group of plates 136 is brought into a pressure contact state. As a result, the inner 71 and the outer 72 rotate together, and the third clutch 70 is engaged.

On the other hand, when the pressure in the working chamber 137 is decreased, the pressure plate 163 is displaced to the boss 162 by the compression coil spring 92. By this, the pressure contact state of the group of plates 136 is released. As a result, the inner 71 and the outer 72 can relatively rotate together, and the third clutch 70 is disengaged.

Although not shown in the figures, a tiny leak hole that communicates with the working chamber 137 is formed in the third clutch 70. Further, a gap between the inner 71 and the outer 72 is not sealed. Thus, the oil in the working chamber 137 can be rapidly discharged when the clutch 70 is disengaged. Therefore, according to the embodiment, the response of the clutch 70 can be improved. In addition, according to the embodiment, the oil scattering from the leak hole or the gap between the inner 71 and the outer 72 can be used to lubricate other sliding sections effectively.

The fourth clutch 66 is provided with a group of plates 132. The group of plates 132 includes a plurality of friction plates 130 and a plurality of clutch plates 131. The plurality of friction plates 130 and the plurality of clutch plates 131 are alternately laminated in the vehicle width direction. The friction plates 130 cannot rotate with respect to the outer 68. On the other hand, the clutch plates 131 cannot rotate with respect to the inner 67.

The inner 67 can rotate with respect to the outer 68 and be displaced in the vehicle width direction. A pressure plate 161 is formed opposite to the outer 68 of the inner 67 in the vehicle width direction. The pressure plate 161 is urged to the right of the vehicle width direction by a compression coil spring 89. That is, the pressure plate 161 is urged to the boss 162 by the compression coil spring 89.

A working chamber 133 is formed between the boss 162 and the pressure plate 161. The working chamber 133 is filled with oil. As the oil pressure in the working chamber 133 is increased, the pressure plate 161 is displaced in a direction to be separate from the boss 162. By this, the distance between the pressure plate 161 and the inner 67 is short. Thus, the group of plates 132 is brought into a pressure contact state. As a result, the inner 67 and the outer 68 rotate together, and the fourth clutch 66 is engaged.

On the other hand, when the pressure in the working chamber 133 is decreased, the pressure plate 161 is displaced to the boss 162 by the compression coil spring 89. By this, the pressure contact state of the group of plates 132 is released. As a result, the inner 67 and the outer 68 can relatively rotate together, and the fourth clutch 66 is disengaged.

Although not shown in the figures, a tiny leak hole that communicates with the working chamber 133 is formed in the fourth clutch 66. Further, a gap between the inner 67 and the outer 68 is not sealed. Thus, the oil in the working chamber 133 can be rapidly discharged when the clutch 66 is disengaged. Therefore, according to the embodiment, the response of the clutch 66 can be improved. In addition, according to the embodiment, the oil scattering from the leak hole or the gap between the inner 67 and the outer 68 can be used to lubricate other sliding sections effectively.

### - Oil path 139 -

As shown in FIG. 7, an oil pump 140 applies and regulates the pressure in the working chamber 133 of the fourth clutch 66 and the pressure in the working chamber 137 of the third clutch 70. As shown in FIG. 7, an oil reservoir 99 is formed at the bottom of the crank chamber 35. A strainer 141 is immersed in the oil reservoir 99. The strainer 141 is connected to the oil pump 140. When the oil pump 140 is driven, the oil accumulated in the oil reservoir 99 is pumped up via the strainer 141.

A relief valve 147 is provided in the middle of a first oil path 144. The pumped oil is purified by an oil cleaner 142, and is regulated to a predetermined pressure by the relief valve 147. After that, a part of the purified oil is supplied to the crank shaft 34 and a sliding section in the cylinder head 40. Further, a part of the purified oil is also supplied to the working chamber 133 of the fourth clutch 66 and the working chamber 137 of the third clutch 70. More specifically, a second oil path 145 and a third oil path 146 are connected to the first oil path 144 that extends from the oil cleaner 142. The second oil path 145 extends from a valve 143, and passes on the transmission cover 50 side. Then, from the right end of the second rotation shaft 54, it extends through the inside of the second rotation shaft 54. Then, the second oil path 145 reaches the working chamber 133. Accordingly, the oil is supplied to the working chamber 133 via the second oil path 145, and the pressure in the working chamber 133 is regulated. On the other hand, the third oil path 146 extends from the valve 143, and passes on the crank case 32 side. Then, from the left end of the second rotation shaft 54, it extends through the inside of the second rotation shaft 54. Then, the third oil path 146 reaches the working chamber 137. Accordingly, the oil is supplied to the working chamber 137 via the third oil path 146.

The valve 143 is provided at the connecting section of the first oil path 144, the second oil path 145, and the third oil path 146. The valve 143 opens and closes between the first oil path 144 and the third oil path 146, and between the first oil path 144 and the second oil path 145.

As shown in FIG. 18, a motor 150 that drives the valve 143 is attached to the valve 143. The motor 150 drives the valve 143, whereby the third clutch 70 and the fourth clutch 66 are engaged/disengaged. That is, in this embodiment, the oil pump 140, the valve 143, and the motor 150 form an actuator 103 that applies hydraulic pressure to the third clutch 70 and the fourth clutch 66 that are hydraulic clutches. An ECU 138 shown in FIG. 18 controls the actuator 103 that regulates the hydraulic pressures of the third clutch 70 and the fourth clutch 66. More specifically, the hydraulic pressures in the working chamber 133 and the working chamber 137 are regulated. Thus, the third clutch 70 and the fourth clutch 66 are engaged/disengaged.

To be more specific, as shown in FIG. 18, a throttle opening degree sensor 112 and the vehicle speed sensor 88 are connected to the ECU 138. The ECU 138 serving as a control portion controls the actuator 103 based on at least one of the throttle opening degree detected by the throttle opening degree sensor 112 and the vehicle speed detected by the vehicle speed sensor 88. In this embodiment, the ECU 138 serving as the control portion controls the actuator 103 based on both the throttle opening degree detected by the throttle opening degree sensor 112 and the vehicle speed detected by the vehicle speed sensor 88. More specifically, the ECU 138 controls the actuator 103 based on information that is obtained by applying the throttle opening degree output from the throttle opening degree sensor 112 and the vehicle speed output from the vehicle speed sensor 88 to a V-N diagram read from a memory 113.

Specifically, the valve 143 is formed in a substantially cylindrical shape. An internal path 148 for connecting the first oil path 144 and the second oil path 145, and an internal path 149 for connecting the first oil path 144 and the third oil path 146 are formed in the valve 143. The internal paths 148 and 149 are designed to select one of the following positions when the valve 143 is rotated by the motor 150: a position where the first oil path 144 and the second oil path 145 are connected, while the first oil path 144 and the third oil path 146 are disconnected; a position where the first oil path 144 and the third oil path 146 are connected, while the first oil path 144 and the second oil path 145 are disconnected; and a position where the first oil path 144 and the third oil path 146 are disconnected, and the first oil path 144 and the second oil path 145 are also disconnected. Thus, one of the following states is selected: a state where both the fourth clutch 66 and the third clutch 70 are disengaged; a state where the fourth clutch 66 is engaged, while the third clutch 70 is disengaged; and a state where the fourth clutch 66 is disengaged, while the third clutch 70 is engaged.

### - Operation of the transmission 31 -

Next, the operation of the transmission 31 will be described in detail with reference to FIG. 9 to FIG. 12.

### - First speed when starting from standstill -

First, when the engine 30 is started, the crank shaft 34 (the input shaft 52) starts to rotate. The inner 56 of the first clutch 55 rotates together with the input shaft 52. Therefore, when the rotation speed of the input shaft 52 becomes equal to or higher than a predetermined rotation speed (the first rotation speed), and a centrifugal force equal to or larger than a predetermined magnitude is applied to the inner 56, the first clutch 55 is engaged as shown in FIG. 9. When the first clutch 55 is engaged, the first pair of shift gears 86 rotates together with the outer 57 of the first clutch 55. Thus, the rotation of the input shaft 52 is transmitted to the first rotation shaft 53.

The ninth gear 87 rotates together with the first rotation shaft 53. Accordingly, the first pair of transmission gears 84 also rotates along with the rotation of the first rotation shaft 53. Thus, the rotation of the first rotation shaft 53 is transmitted to the second rotation shaft 54 via the first pair of transmission gears 84.

The seventh gear 74 rotates together with the second rotation shaft 54. Accordingly, the second pair of transmission gears 85 also rotates along with the rotation of the second rotation shaft 54. Thus, the rotation of the second rotation shaft 54 is transmitted to the third rotation shaft 64 via the second pair of transmission gears 85.

The thirteenth gear 79 rotates together with the third rotation shaft 64. Accordingly, the third pair of transmission gears 98 also rotates along with the rotation of the third rotation shaft 64. Thus, the rotation of the third rotation shaft 64 is transmitted to the output shaft 33 via the third pair of transmission gears 98.

In this manner, when the moped 2 is started from standstill, that is, in the first speed, rotation is transmitted from the input shaft 52 to the output shaft 33 via the first clutch 55, the first pair of shift gears 86, the first pair of transmission gears 84, the second pair of transmission gears 85, and the third pair of transmission gears 98, as shown in FIG. 9.

### - Second speed -

In the first speed, the twelfth gear 65 common with the ninth gear 87 rotates together with the first rotation shaft 53. Therefore, the eleventh gear 62 meshing with the twelfth gear 65 and the inner 60 of the second clutch 59 also rotate together. Accordingly, as the rotation speed of the input shaft 52 increases, the rotation speed of the inner 60 of the second clutch 59 also increases. When the rotation speed of the input shaft 52 becomes equal to or higher than the second rotation speed that is higher than the first rotation speed, the rotation speed of the inner 60 also increases accordingly, and the second clutch 59 is engaged, as shown in FIG. 10.

Note that, in this embodiment, the gear ratio of the fourth pair of shift gears 83 is smaller than the gear ratio of the first pair of shift gears 86. As a result, the rotation speed of the twelfth gear 65 is higher than the rotation speed of the second gear 63. Accordingly, rotation is transmitted from the input shaft 52 to the first rotation shaft 53 via the fourth pair of shift gears 83. On the other hand, the rotation of the first rotation shaft 53 is not transmitted to the input shaft 52 by the one-way rotation transmission mechanism 96.

The rotation force is transmitted from the first rotation shaft 53 to the output shaft 33, in the same manner as in the first speed, via the first pair of transmission gears 84, the second pair of transmission gears 85, and the third pair of transmission gears 98.

In this manner, in the second speed, rotation is transmitted from the input shaft 52 to the output shaft 33 via the second clutch 59, the fourth pair of shift gears 83, the first pair of transmission gears 84, the second pair of transmission gears 85, and the third pair of transmission gears 98, as shown in FIG. 10.

### - Third speed -

In the second speed, when the rotation speed of the crank shaft 34 (i.e., the input shaft 52) becomes higher than the second rotation speed, and the vehicle speed becomes equal to or higher than a predetermined vehicle speed, the valve 143 is driven and the third clutch 70 is engaged, as shown in FIG. 11. As a result, the third pair of shift gears 91 starts to rotate. Note that the gear ratio of the third pair of shift gears 91 is smaller than the gear ratio of the second pair of transmission gears 85. Therefore, the rotation speed of the sixth gear 77 of the third pair of shift gears 91 becomes higher than the rotation speed of the eighth gear 78 of the second pair of transmission gears 85. Thus, the rotation of the second rotation shaft 54 is transmitted to the third rotation shaft 64 via the third pair of shift gears 91. On the other hand, the rotation of the third rotation shaft 64 is not transmitted to the second rotation shaft 54 by the one-way rotation transmission mechanism 93.

The rotation of the third rotation shaft 64 is transmitted to the output shaft 33 via the third pair of transmission gears 98, in the same manner as in the first speed and the second speed.

In this manner, in the third speed, rotation is transmitted from the input shaft 52 to the output shaft 33 via the second clutch 59, the fourth pair of shift gears 83, the first pair of transmission gears 84, the third clutch 70, the third pair of shift gears 91, and the third pair of transmission gears 98, as shown in FIG. 11.

### - Fourth speed -

In the third speed, when the rotation speed of the crank shaft 34 (i.e., the input shaft 52) further increases and the vehicle speed further increases as well, the valve 143 is driven and the fourth clutch 66 is engaged, as shown in FIG. 12. On the other hand, the third clutch 70 is disengaged. As a result, the second pair of shift gears 90 starts to rotate. Note that the gear ratio of the second pair of shift gears 90 is also smaller than the gear ratio of the second pair of transmission gears 85. Therefore, the rotation speed of the fourth gear 76 of the second pair of shift gears 90 becomes higher than the rotation speed of the eighth gear 78 of the second pair of transmission gears 85. Thus, the rotation of the second rotation shaft 54 is transmitted to the third rotation shaft 64 via the second pair of shift gears 90. On the other hand, the rotation of the third rotation shaft 64 is not transmitted to the second rotation shaft 54 by the one-way rotation transmission mechanism 93.

The rotation of the third rotation shaft 64 is transmitted to the output shaft 33 via the third pair of transmission gears 98, in the same manner as in the first speed to the third speed.

In this manner, in the fourth speed, rotation is transmitted from the input shaft 52 to the output shaft 33 via the second clutch 59, the fourth pair of shift gears 83, the first pair of transmission gears 84, the fourth clutch 66, the second pair of shift gears 90, and the third pair of transmission gears 98, as shown in FIG. 12.

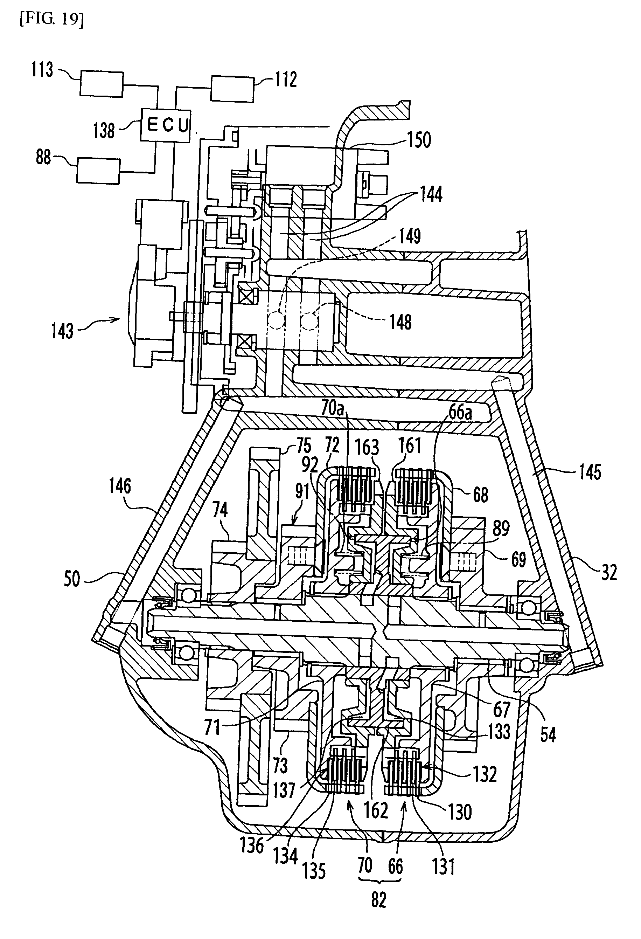

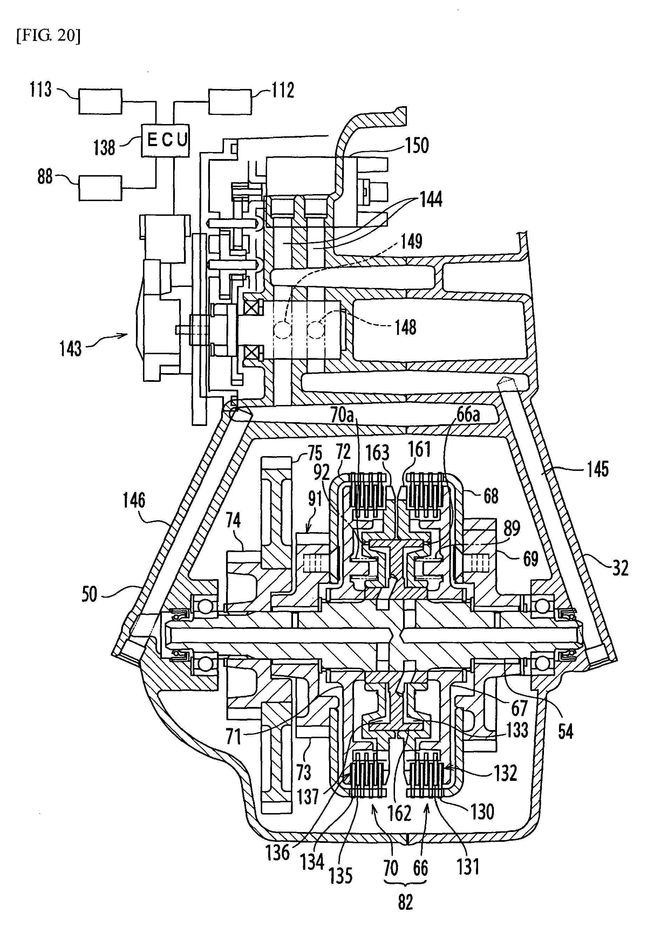

In the first and second embodiments, a leak hole 70a serving as a first hydraulic pressure release path is formed in the third clutch 70 serving as a first hydraulic clutch, as shown in FIGS. 19 and 20. By this, when the third clutch 70 and the oil pump 140 are disengaged by the valve 143, it is possible to rapidly decrease the oil pressure in the working chamber 137. In addition, a leak hole 66a serving as a second hydraulic pressure release path is formed in the fourth clutch 66 serving as the second hydraulic clutch. By this, when the fourth clutch 66 and the oil pump 140 are disengaged by the valve 143, it is possible to rapidly decrease the oil pressure in the working chamber 133. Thus, according to the first and second embodiments, shift between the third speed and the fourth speed can be smoothly performed.

In addition, the leak holes 66a and 70a are not provided with valves. For this reason, the number of required valves is reduced in the transmission 31 of the first and second embodiments. Thus, the structure of the transmission 31 as well as the engine unit 20 can be simplified thereby to realize reduction in size.

Further, a flow path area of the leak holes 66a and 70a is not specifically limited if the flow path area is within an area which the clutches 66 and 70 are engaged when the oil pump 140 and the clutches 66 and 70 are engaged. The flow path area of the leak holes 66a and 70a can be properly set according to capacity of the clutches 66 and 70, power of the oil pump 140 and the like. The flow path area of the leak holes 66a and 70a may be larger or smaller than or substantially equal to that of the second and third oil paths 145 and 146. The flow path area of the leak holes 66a and 70a, for example, may be not more than 0.95 times that of the second and third oil paths 145 and 146.

Further, the term "leak hole" in the invention refers to a hole for leaking oil. The leak hole is typically formed in a circular shape in a lateral sectional view. However, the shape of leak hole is not limited to this, and it is possible to be properly set according to characteristics of the clutch. In addition, for example, the leak hole may be formed by a engaged space of the boss configuring the working chamber and the pressure plate.

The flow path area of the leak hole is not specifically limited if the flow path area is within an area of the clutch in an engaging state when the oil pressure is applied to the working chamber. For example, when the leak hole has a schematically circular shape in a lateral sectional view, the diameter of leak hole is typically about 1 to 2mm.

For example, intermittence between the oil pump 140 and the working chambers 133 and 137 may be considered to be performed by a solenoid valve. However, when the intermittence between the oil pump 140 and the working chambers 133 and 137 is performed by using the solenoid valve, it is necessary for valves to be provided between the oil pump 140 and the working chamber 133 and between the oil pump 140 and the working chamber 137. That is, valves are necessary with respect to the working chambers 133 and 137. Thus, the number of required valves is increased. As a result, the structure of transmission 31 becomes complicated, and the transmission 31 tends to be large.

In this regard, a rotary type of valve 143 is used in the intermittence between the oil pump 140 and the working chambers 133 and 137 in the embodiment. For this reason, the intermittence between the oil pump 140 and the working chambers 133 and 137 can be performed by only one valve 143. Thus, the structure of transmission 31 can be simple. As a result, the transmission 31 can be reduced in size.

As described above, the third clutch 70 and the fourth clutch 66 in the first and second embodiments are hydraulic clutches. Accordingly, clutch engagement/disengagement for the third clutch 70 and the fourth clutch 66 is comparatively fast. In other words, when the clutch is engaged/disengaged, the third clutch 70 and the fourth clutch 66 do not continue to slide over a comparatively long period of time. For that reason, the energy loss of the third clutch 70 and the fourth clutch 66 is relatively small. It is therefore possible to improve the fuel efficiency of the scooter type vehicle 1.

From the point of view of improving the fuel efficiency of the scooter type vehicle 1, it is desirable for the first clutch 55 and the second clutch 59 to be hydraulic clutches in addition to the third clutch 70 and the fourth clutch 66. However, the engagement/disengagement of hydraulic clutches is comparatively fast. For that reason, if the first clutch 55 is a hydraulic clutch, the first clutch 55 engages suddenly when starting from standstill. It is therefore difficult to start smoothly from standstill. It is therefore not possible to achieve both a smooth start from standstill and improved fuel efficiency.

In this respect, in the first and second embodiments, the first clutch 55 provided for the first pair of shift gears 86 in the first speed is a centrifugal clutch. Centrifugal clutches engage/disengage more slowly in comparison to hydraulic clutches. For that reason, the vehicle can make a smooth start from standstill. Namely, as well as adopting a centrifugal clutch as the first clutch 55 provided for the first pair of shift gears 86 in the first speed, by adopting a hydraulic clutch for at least one other clutch for a pair of shift gears in a higher speed than first speed, fuel efficiency can be improved and a smooth start from standstill can also be achieved. In particular, from the point of view of achieving a smooth vehicle start from standstill and smooth acceleration, it is desirable for the second clutch 59 to also be a centrifugal clutch.

Even if the first clutch 55 and the second clutch 59 in the first and second embodiments are centrifugal clutches, they do not continue to slide over a significantly long period of time. Also, the frequency of running in first and second speed is relatively low. In other words, the amount of running time occupied by the first and second speeds over the total running time is relatively small. Therefore, even if the first clutch 55 and the second clutch 59 are centrifugal clutches, there is no significant deterioration in fuel efficiency.

However, if priority is placed on improved fuel efficiency in preference to smooth acceleration, the first clutch 55 only may be a centrifugal clutch and the other clutches may be hydraulic clutches.

In other words, further improvements to fuel efficiency can be achieved by using two or more hydraulic clutches, as in the above-described first and second embodiments.

In the above-described first and second embodiments, as the first clutch 55 is a centrifugal clutch, the manner of engagement of the first clutch 55 changes appropriately in accordance with the control input of the throttle controller, the degree of acceleration of the vehicle and so on. For that reason, by adopting a centrifugal clutch as the first clutch 55, driving that reflects the intentions of the rider can be achieved.

For example, if the rider needs to start from standstill with a relatively large degree of acceleration, and operates the throttle controller a large amount, the first clutch 55 engages relatively quickly, and starts from standstill with a relatively large degree of acceleration. On the other hand, if the rider needs to start from standstill smoothly with a relatively small degree of acceleration and operates the throttle controller a small amount, the first clutch 55 engages relatively slowly and performs a smooth start from standstill with a relatively low degree of acceleration. High drivability is therefore achieved.

The engagement/disengagement timing of the centrifugal clutch is decided by the engine rotation speed, while the engagement/disengagement timing of the hydraulic clutch can be freely controlled by control by the ECU 138. In other words, the freedom of control of the transmission 31 is raised by using two or more hydraulic clutches. Specifically, clutch engagement/disengagement control can be finely adjusted depending on the running status and the rider's operations. More specifically, the engagement/disengagement of the clutch can be finely controlled based on at least one of the degree of opening of the throttle and the vehicle speed.

For example, when a plurality of hydraulic clutches are used, as in the above-described first and second embodiments, it is desirable for the plurality of hydraulic clutches to be disposed on the same rotation shaft. Specifically, in the cases of the first and second embodiments described above, it is desirable for the third clutch 70 and the fourth clutch 66 that are hydraulic clutches to be disposed on the same second rotation shaft 54. By disposing them in this way, a hydraulic clutch oil feed path can be made relatively simple. Therefore, the structure of the transmission 31 can be further simplified.

It is also possible to reduce the number of rotation shafts that form the internal oil feed path. The manufacture of the transmission is therefore simplified, and manufacturing costs can also be reduced.

From the point of view of simplifying the structure of the transmission 31 in particular, it is desirable for the rotation shaft on which the hydraulic clutches are disposed to be separate from the rotation shaft on which the centrifugal clutches are disposed, as in the first and second embodiments described above. Specifically, it is desirable for the first clutch 55 and the second clutch 59 that are centrifugal clutches to be disposed on the input shaft 52 and for the third clutch 70 and the fourth clutch 66 that are hydraulic clutches to be disposed on the second rotation shaft 54, as in the above-described first and second embodiments.

### «First modified example»

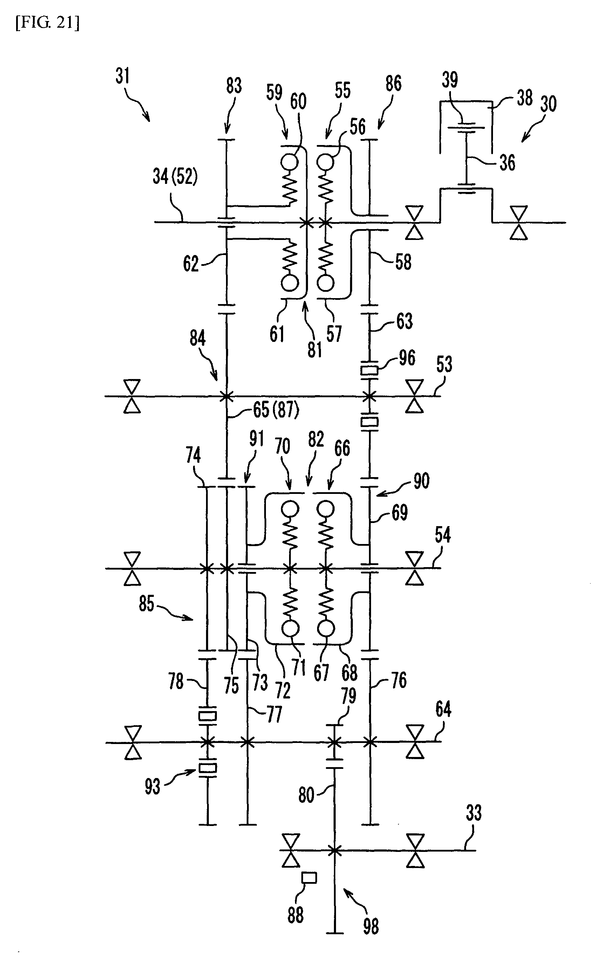

In the above-described embodiments, an example is explained in which the outer 57 of the first clutch 55 and the outer 61 of the second clutch 59 are formed by the same member. However, the invention is not limited to this structure. For example, as shown in FIG. 21, the outer 57 of the first clutch 55 and the outer 61 of the second clutch 59 may be provided separately.

### «Second modified example»

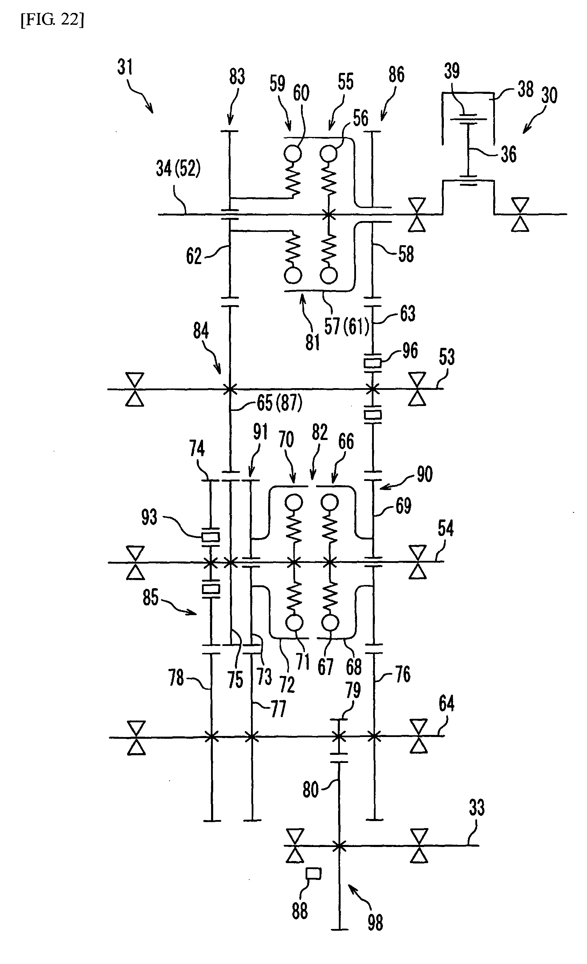

In the above-described embodiments, an example is explained in which the one-way rotation transmission mechanism 93 is provided for the eighth gear 78. However, the invention is not limited to this structure. For example, as shown in FIG. 22, the one-way rotation transmission mechanism 93 may be provided for the seventh gear 74.

### «Third modified example»

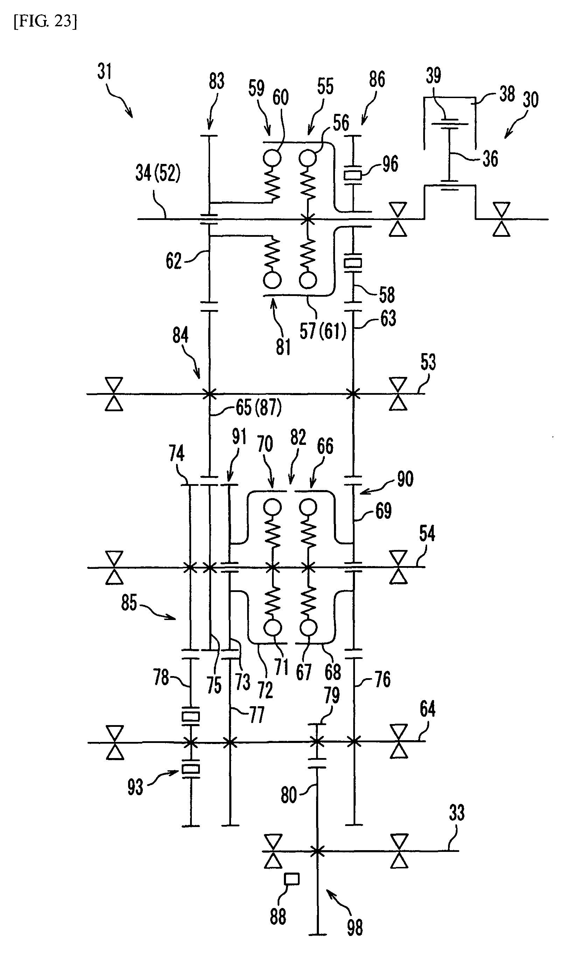

In the above-described embodiments, an example is explained in which the one-way rotation transmission mechanism 96 is provided for the second gear 63. However, the invention is not limited to this structure. For example, as shown in FIG. 23, the one-way rotation transmission mechanism 96 may be provided for the first gear 58.

### «Fourth modified example»

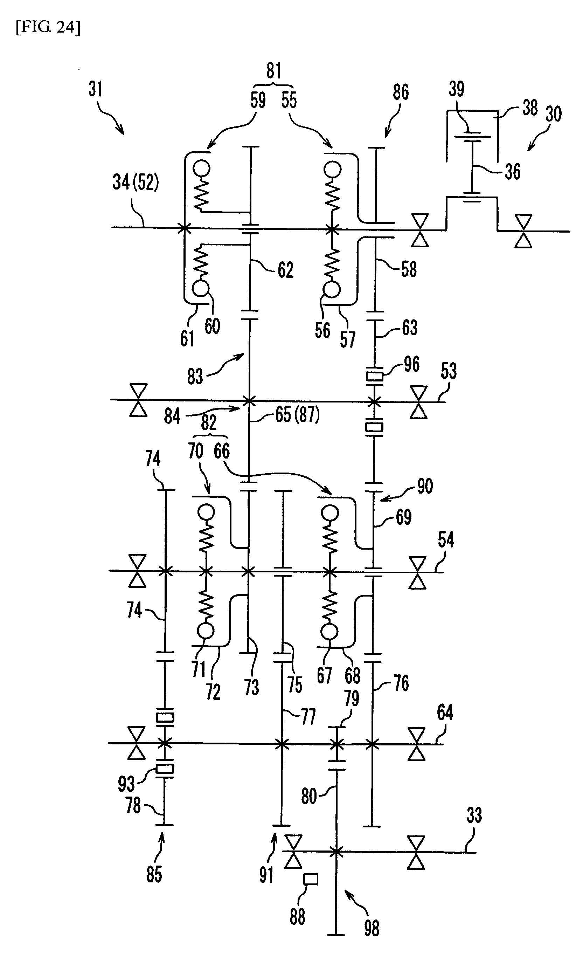

In the above-described embodiments, an example is explained in which the first clutch 55 and the second clutch 59 are disposed between the first pair of shift gears 86 and the fourth pair of shift gears 83. However, the invention is not limited to this structure. For example, as shown in FIG. 24, the first clutch 55 may be disposed on the left side of the first pair of shift gears 86, and the second clutch 59 may be disposed on the left side of the fourth pair of shift gears 83.

In a similar manner, in the above-described embodiments, an example is explained in which the third clutch 70 and the fourth clutch 66 are disposed between the third pair of shift gears 91 and the second pair of shift gears 90. However, the invention is not limited to this structure. For example, as shown in FIG. 24, the third clutch 70 may be disposed on the left side of the third pair of shift gears 91, and the fourth clutch 66 may be disposed on the left side of the second pair of shift gears 90.

Also in the case shown in FIG. 24, the input shaft 52, the first rotation shaft 53, the second rotation shaft 54, the third rotation shaft 64, and the output shaft 33 are arranged in the front-rear direction. Accordingly, the transmission 31 having a relatively narrow width can be realized.

### «Fifth modified example»

In the above-described embodiments, the four speed automatic transmission 31 is described as an example of the preferred embodiment of the invention. However, the invention is not limited to this example. For example, the transmission 31 may have 5 or more speeds. In this case, it is conceivable to include an additional two rotation shafts between the third rotation shaft 64 and the output shaft 33, and locate additional clutches and additional pairs of shift gears on the two added rotation shafts.

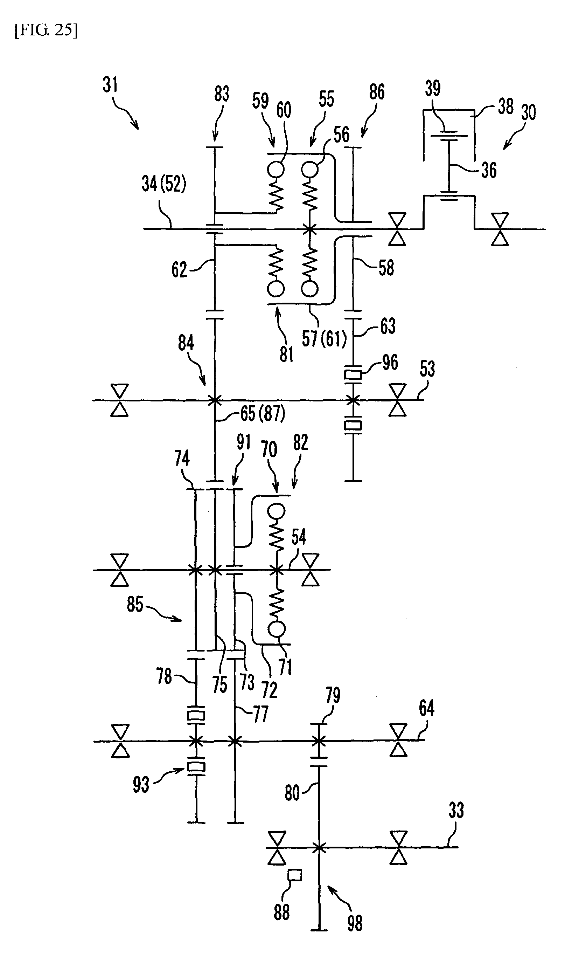

Also, for example, the transmission 31 may be a three speed transmission, as shown in FIG. 25. Specifically, when adopting a three speed transmission, it is conceivable to adopt the transmission 31 structure shown in FIG. 4 without the fourth clutch 66 and the second pair of shift gears 90, as shown in FIG. 25.

### «Sixth modified example»

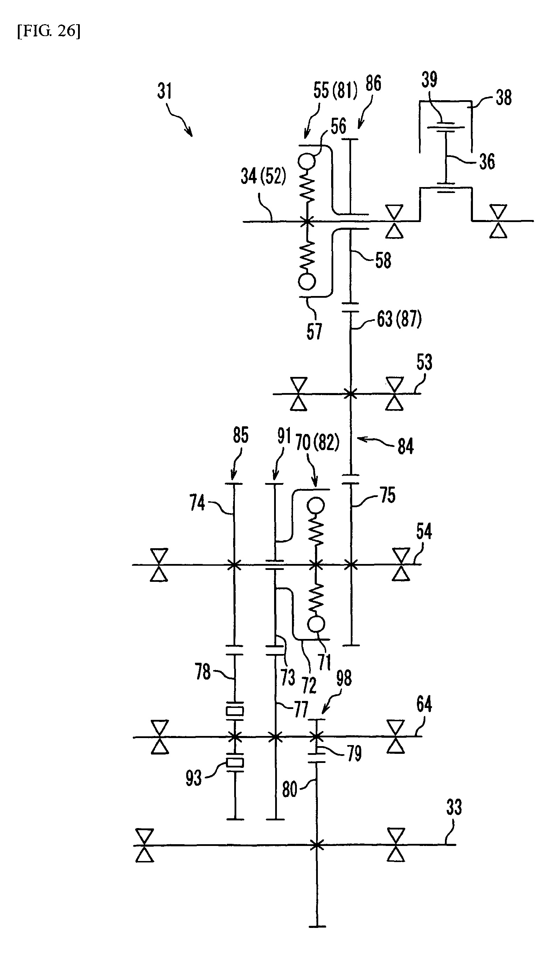

Also, for example, the transmission 31 may be a two speed transmission, as shown in FIG. 26. Specifically, when adopting a two speed transmission, it is conceivable to adopt the transmission 31 structure shown in FIG. 4 without the second clutch 59, the fourth pair of shift gears 83, the one-way rotation transmission mechanism 96, the fourth clutch 66 and the second pair of shift gears 90, as shown in FIG 26.

### «Other modified examples»

In the above-described embodiments, an example is explained in which the engine 30 is a single cylinder engine. However, in the invention, the engine 30 is not limited to a single cylinder engine. The engine 30 may be, for example, a multi-cylinder engine such as a two cylinder engine.

In the above-described embodiments, an example is explained in which the output shaft 33 and the third rotation shaft 64 are separately provided. However, the invention is not limited to this structure. The output shaft 33 and the third rotation shaft 64 may be common. In other words, the rear wheel 18 may be attached to the third rotation shaft 64.

In the first and second embodiments and the modified examples described above, an example is explained in which the pairs of gears mesh directly with each other. However, the invention is not limited to this structure. The pairs of gears may mesh indirectly via separately provided gears.

In the above-described second embodiment, as shown in FIG. 15, an example is described in which the axis C2 of the first rotation shaft 53 is located at a position that is relatively further upward in relation to the axis C4 of the third rotation shaft 64. However, the invention is not limited to this structure. For example, the axis C2 of the first rotation shaft 53 may be located at a position that is relatively downward in relation to the axis C4 of the third rotation shaft 64. Specifically, the first rotation shaft 53 may be located such that the axis C2 of the first rotation shaft 53 is located on the lower side of the plane P. The third rotation shaft 64 may be located such that the axis C4 of the third rotation shaft 64 is located on the upper side of the plane P.

### «Definition of terms in the specification»

In the specification, the "motorcycle" is not limited to a motorcycle defined in a narrow sense. The term "motorcycle" indicates a motorcycle defined in a broad sense. More specifically, in the specification, the term "motorcycle" indicates any vehicle that changes direction by banking the vehicle. At least one of the front wheel and the rear wheel may include a plurality of wheels. More specifically, the "motorcycle" may be a vehicle in which at least one of the front wheel and the rear wheel includes two wheels that are arranged adjacent to each other. Examples of the "motorcycle" include, at least, a motorcycle defined in a narrow sense, a scooter type vehicle, a moped type vehicle, and an off-road vehicle.

The term "centrifugal clutch" refers to a clutch that includes an input side clutch member and an output side clutch member, where, when a rotation speed of the input side clutch member is higher than a predetermined rotation speed, the input side clutch member and the output side clutch member are engaged and joined, and when the rotation speed of the input side clutch member is lower than the predetermined rotation speed, the input side clutch member and the output side clutch member are separate and disengaged.

### «Third Embodiment»

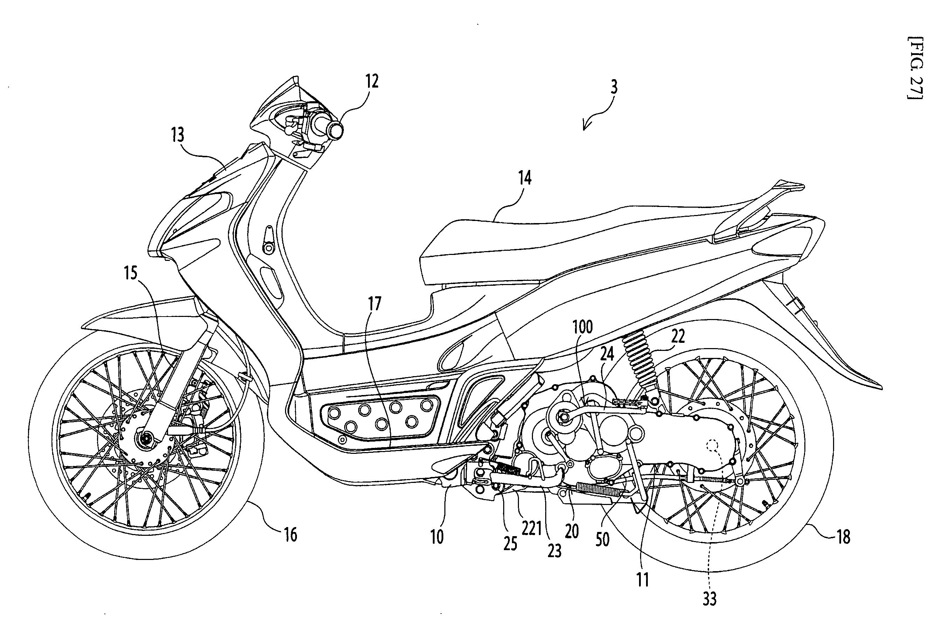

FIG. 27 is a left side view of a motorcycle 3 according to a third embodiment. The motorcycle 3 of the embodiment will be described in detail. Note that, in the description of the embodiment, structural members that have a substantially common function with the first and second embodiments will be referred to using common reference numerals, and omit the description thereof.

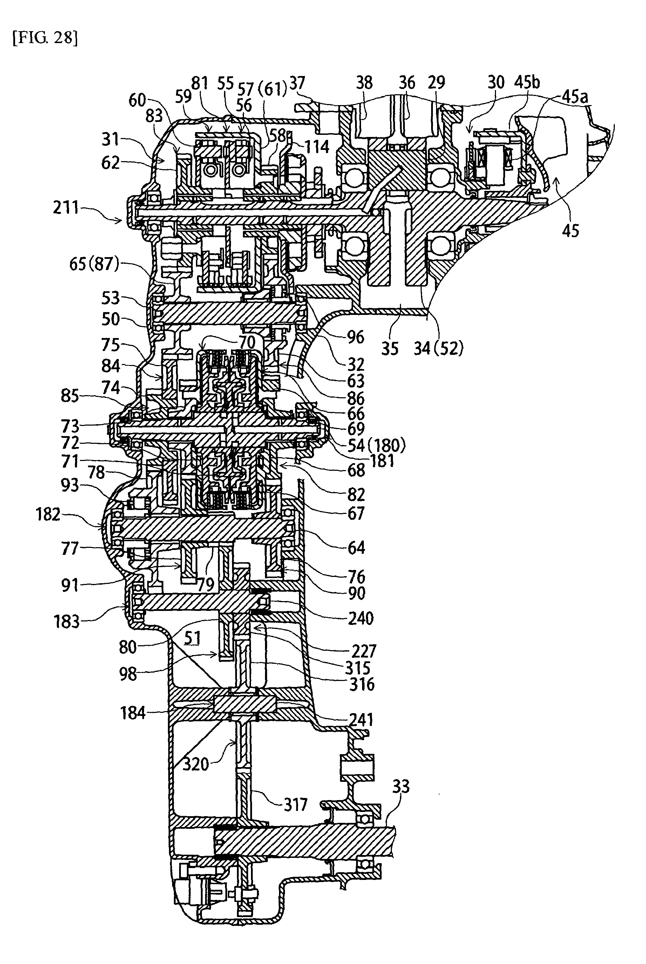

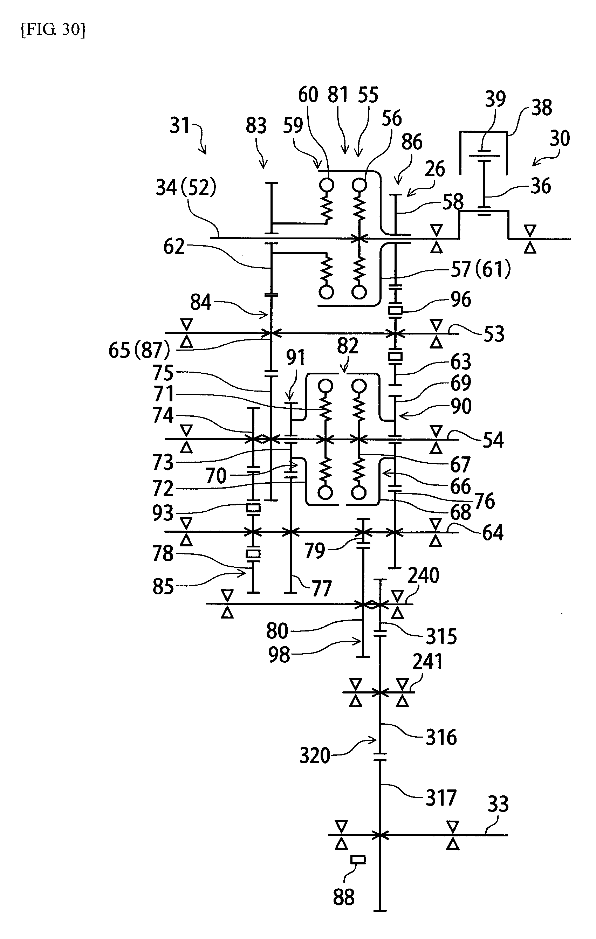

As shown in FIGS. 28 and 30, in the third embodiment, a fourth rotation shaft 240 and a fifth rotation shaft 241 are provided between the third rotation shaft 64 and the output shaft 33. The fourteenth gear 80 is attached to the fourth rotation shaft 240 such that it cannot rotate.

Further, a fifteenth gear 315 is attached to the fourth rotation shaft 240 such that it cannot rotate. The fifteenth gear 315 meshes with a seventeenth gear 317 attached to the output shaft 33 such that it is incapable of rotating via a sixteenth gear 316 which is rotatably attached to the fifth rotation shaft 241. A fourth pair of transmission gears 320 is formed by the fifteenth gear 315, the sixteenth gear 316, and the seventeenth gear 317. Rotation of the fourth rotation shaft 240 is transmitted to the output shaft 33 by the fourth pair of transmission gears 320.

In the embodiment, a shaft body 180 of a first intermediate shaft is provided with the second rotation shaft 54 as shown in FIG. 28. The first intermediate shaft 181 includes the second rotation shaft 54, the third clutch 70, the fourth clutch 66, the third gear 69, the fifth gear 73, the tenth gear 75, and the seventh gear 74.

Further, in the embodiment, three second intermediate shafts are provided. The first of the second immediate shaft 182 includes the third rotation shaft 64, the fourth gear 76, the thirteenth gear 79, the sixth gear 77, and the eighth gear 78. The second of the second immediate shaft 183 includes the fourth rotation shaft 240, the fourteenth gear 80, and the fifteenth gear 315. The third of the second immediate shaft 184 includes the fifth rotation shaft 241 and the sixteenth gear 316.

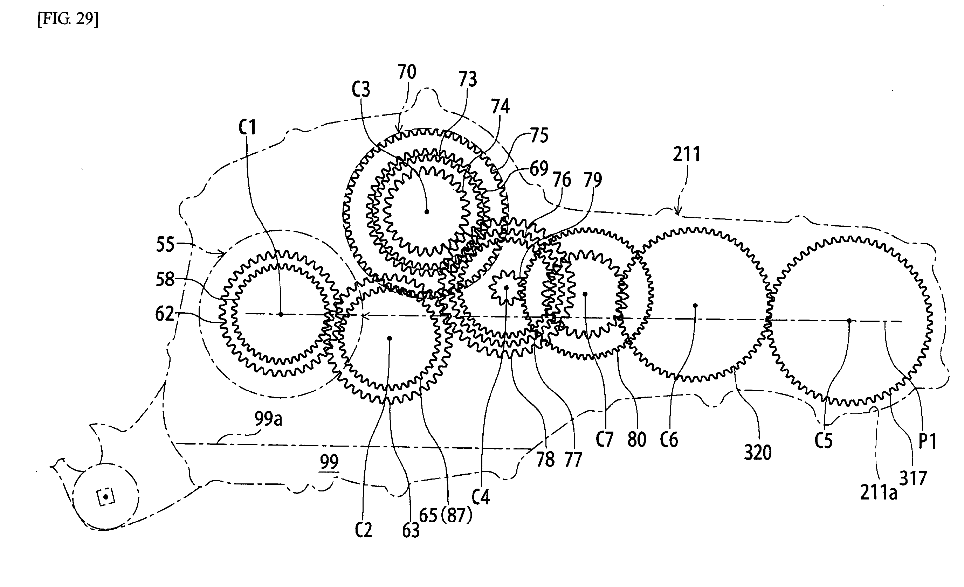

As shown in FIG. 29, the axis C2 of the first rotation shaft 53 is located to the rear of the axis C 1 of the input shaft 52. Further, the axis C2 of the first rotation shaft 53 is located on the downside of the axis C1 of the input shaft 52. The axis C2 of the first rotation shaft 53 is located to the slightly lower than the plane P including the axis C of the input shaft 52 and the axis C5 of the output shaft 33.

The axis of the first immediate shaft 181 has the same axis as the axis C3 of the second rotation shaft 54. The axis C3 of the second rotation shaft 54 is located to the rear of the axis C 1 of the input shaft 52 and the axis C2 of the first rotation shaft 53. The axis C3 of the second rotation shaft 54 is located to the upper side of the axis C 1 of the input shaft 52 and the axis C2 of the first rotation shaft 53. The axis C3 of the second rotation shaft 54 is located to the upper side of the plane P.

The axis of the second immediate shaft 182 has the same axis as the axis C4 of the third rotation shaft 64. The axis C4 of the third rotation shaft 64 is located to the rear of the axis C1 of the input shaft 52, the axis C2 of the first rotation shaft 53, and the axis C3 of the second rotation shaft 54. The axis C4 of the third rotation shaft 64 is located to the slightly upper side of the axis C 1 of the input shaft 52 and the axis C2 of the first rotation shaft 53. The axis C4 of the third rotation shaft 64 is located to the lower side of the axis C3 of the second rotation shaft 54. The axis C4 of the third rotation shaft 64 is located to the upper side of the plane P.

The axis of the third immediate shaft 183 has the same axis as the axis C7 of the fourth rotation shaft 240. The axis C7 of the fourth rotation shaft 240 is located to the rear of the axis C1 of the input shaft 52, the axis C2 of the first rotation shaft 53, the axis C3 of the second rotation shaft 54, and the axis C4 of the third rotation shaft 64. The axis C7 of the fourth rotation shaft 240 is located to the slightly upper side of the axis C1 of the input shaft 52 and the axis C2 of the first rotation shaft 53. The axis C7 of the fourth rotation shaft 240 is located to the lower side of the axis C3 of the second rotation shaft 54. The axis C7 of the fourth rotation shaft 240 is located to almost the same height as the axis C4 of the third rotation shaft 64. The axis C7 of the fourth rotation shaft 240 is located to the upper side of the plane P.

The axis of the fourth immediate shaft 184 has the same axis as the axis C6 of the fifth rotation shaft 241. The axis C6 of the fifth rotation shaft 241 is located to the rear of the axis C1 of the input shaft 52, the axis C2 of the first rotation shaft 53, the axis C3 of the second rotation shaft 54, the axis C4 of the third rotation shaft 64, and the axis C7 of the fourth rotation shaft 240. The axis C6 of the fifth rotation shaft 241 is located to the slightly upper side of the axis C 1 of the input shaft 52 and the axis C2 of the first rotation shaft 53. The axis C6 of the fifth rotation shaft 241 is located to the lower side of the axis C3 of the second rotation shaft 54, the axis C4 of the third rotation shaft 64, and the axis C7 of the fourth rotation shaft 240. The axis C6 of the fifth rotation shaft 241 is located to the upper side of the plane P.

Further, the oil reservoir 99 is formed on the lower side the input shaft 52, the first rotation shaft 53, the third rotation shaft 64, and the fourth rotation shaft 240. In the embodiment, the oil reservoir 99 is formed on the front side of the axis C7 of the fourth rotation shaft 240. The oil reservoir 99 is not formed on the lower side of the axis C7 of the fourth rotation shaft 240 and the axis C6 of the fifth rotation shaft 241.

The first and second rotation shafts 53 and 54 are located higher than the oil reservoir 99 when the motorcycle 3 is in a stopped state. Further, in the embodiment, the gears 63, 65, 69, 73, 75, and 74 provided at the first and second rotation shafts 53 and 54 also are located higher than the oil reservoir 99 when the motorcycle 3 is in the stopped state.

In a casing 211 provided with the crank case 32, the transmission cover 50, and the generator cover, a recess 211 a is formed on the lower side of the output shaft 33 such that it is concaved to the lower side.

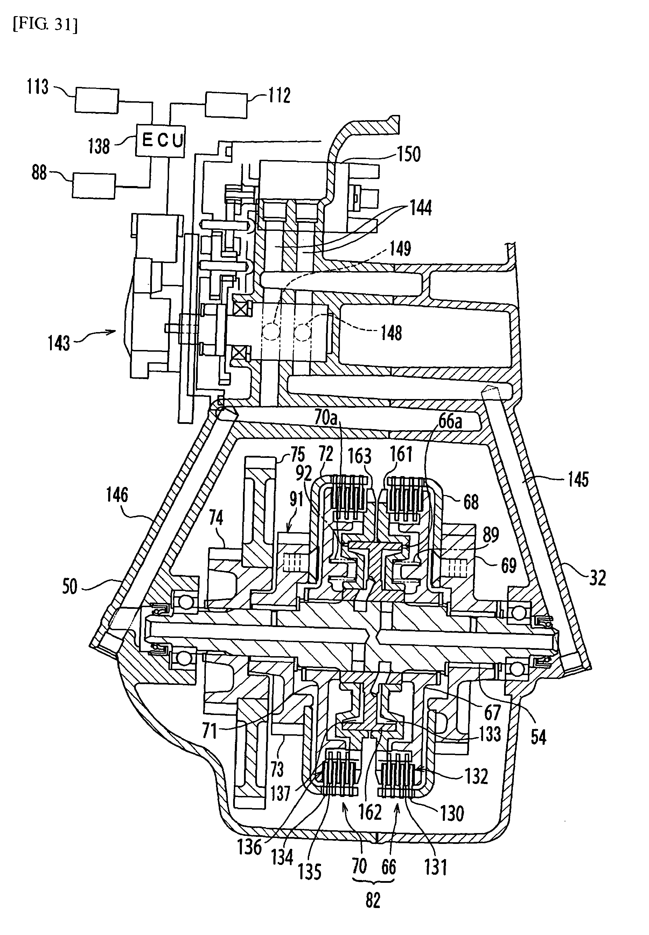

As shown in FIG. 31, also in the third embodiment, the leak holes 70a and 66a are formed at the third and fourth clutches 70 and 66 similar to the first and second embodiments. For this reason, shift between the third speed and the fourth speed can be smoothly performed. Further, valves are not provided at the leak holes 66a and 70a. Thus, the structure of the transmission 31 as well as the engine unit 20 can be simplified thereby to realize reduction in size.

### «Seventh modified example»

In the first to third embodiments, the rotary type of valve 143 used in the intermittence between the working chambers 133 and 137 and the oil pump 140 is described. However, the invention is not limited to this structure. For example, a solenoid valve may be used in the intermittence between the working chambers 133 and 137 and the oil pump 140. In the case of using the solenoid valve, for example, an opening degree of the valve can be finely controlled by controlling a duty. Thus, the oil pressure in the working chambers 133 and 137 can be further finely controlled. Accordingly, clutch force of the clutches 66 and 70 can be further finely controlled.

### «Eighth modified example»

In the first to third embodiments, the clutches 66 and 70 are formed by a hydraulic clutch and an example of the clutches 55 and 59 configured by centrifugal clutches is described. However, the invention is not limited to this structure. For example, at least one of the clutches 55 and 59 together with the clutches 66 and 70 may be configured by a hydraulic clutch.

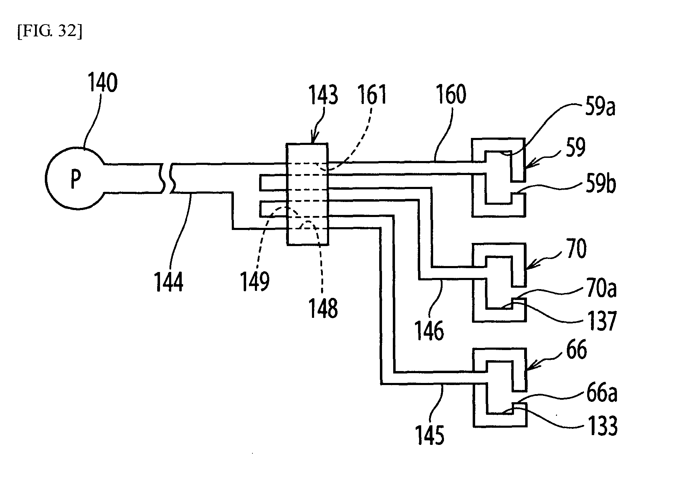

As shown in FIG. 32, in the embodiment, the second clutch 59 is configured by a hydraulic clutch. The second clutch 59 is provided with the working chamber 59a. The working chamber 59a is connected to the first oil path 144 by the fourth oil path 160. The valve 143 is located between the fourth oil path 160 and the first oil path 144. The internal path 161 together with the internal paths 148 and 149 are formed at the valve 143. The fourth oil path 160 and the first oil path 144 are connected by the internal path 161.

The leak hole 59b serving as the third hydraulic pressure release path is formed at the second clutch 59. The leak hole 59b is connected to the working chamber 59a. Oil in the working chamber 59a is discharged from the leak hole 59b.

According to the embodiment, even though three or more hydraulic clutches are provided, the oil pressure supply to three or more hydraulic clutches can be controlled by one valve because of using the rotary type of valve 143. Thus, it is particularly preferable for the transmission using three or more hydraulic clutches to use rotary type of valves.

## Claims

1. A stepped automatic transmission for steppedly switching a plurality of shifts including at least a first shift and a second shift, comprising:
an oil pump for supplying oil;
a first hydraulic clutch having a first working chamber to which oil is supplied from the oil pump, being in an engaged state at the first shift, and being in a disengaged state at the second shift;
a second hydraulic clutch having a second working chamber to which oil is supplied from the oil pump, being in an engaged state at the second shift, and being in a disengaged state at the first shift;
a valve for changing engaged states between the oil pump and each of the first and second working chambers;
a first hydraulic pressure release path being connected to the first working chamber so as to discharge oil in the first working chamber; and
a second hydraulic pressure release path being connected to the second working chamber so as to discharge oil in the second working chamber,
wherein there is no valve in the first and second hydraulic pressure release paths.

2. The stepped automatic transmission according to claim 1,
wherein, when the oil pump is connected to the first or second working chamber, a flow path area of each of the first and second hydraulic pressure release paths are set in order for the first or second hydraulic clutch to be in an engaged state.

3. The stepped automatic transmission according to claim 1,
Wherein a first leak hole connected to the first working chamber is formed at the first hydraulic clutch so as to discharge oil in the first working chamber,
a second leak hole connected to the second working chamber is formed at the second hydraulic clutch so as to discharge oil in the second working chamber,
the first hydraulic pressure release path is formed by the first leak hole, and
the second hydraulic pressure release path is formed by the second leak hole.

4. The stepped automatic transmission according to claim 1,
wherein the valve comprises a solenoid valve.

5. The stepped automatic transmission according to claim 1,
wherein the valve comprises a rotary valve provided with a first connection path which connects the oil pump and the first working chamber at a first rotation angle, and a second connection path which connects the oil pump and the second working chamber at a second rotation angle.

6. The stepped automatic transmission according to claim 5,
wherein the plurality of shifts include a third shift which has a transmission gear ratio different from those of the first and second shifts,
the stepped automatic transmission further comprising:
a third hydraulic clutch having a third working chamber to which oil is supplied from the oil pump, being in an engaged state at the third shift, and being in a disengaged state at the first and second shifts; and
a third hydraulic pressure release path being connected to the third working chamber so as to discharge oil in the third working chamber,
wherein the valve changes engaged states between the oil pump and each of the first to third working chambers,
the first and second hydraulic clutches are brought into a disengaged state at the third shift, and
the third hydraulic pressure release path is not provided with a valve.

7. A vehicle comprising the stepped automatic transmission according to claim 1.
